# EUROPÄISCHE PATENTSCHRIFT

(11) **EP 3 237 157 B1**
(45) Veröffentlichungstag und Bekanntmachung des Hinweises auf die Patenterteilung: **08.08.2018**
(21) Anmeldenummer: 16708642.0
(22) Anmeldetag: 04.03.2016
(51) Int. Cl.: A47J 42/22, A47J 42/32, A47J 19/04, B26D 3/26, B26D 3/18, B26D 5/10, B26D 7/06, B26D 1/02, B26D 1/26

(54) **ZERKLEINERUNGSVORRICHTUNG ZUM SCHNEIDEN VON LEBENSMITTELN, INSBESONDERE ZUM SCHNEIDEN VON KNOBLAUCH**
COMMINUTION DEVICE FOR CUTTING FOOD, IN PARTICULAR FOR CUTTING GARLIC
DISPOSITIF DE BROYAGE POUR COUPER DES ALIMENTS, EN PARTICULIER POUR COUPER AIL

(30) Priorität: 05.03.2015 DE 102015103222
(43) Veröffentlichungstag der Anmeldung: 01.11.2017
(73) Patentinhaber: Genius GmbH, 65549 Limburg (DE)
(72) Erfinder: REPAC, Cedomir, 65611 Brechen (DE)
(74) Vertreter: Grabovac, Dalibor
(86) Internationale Anmeldenummer: PCT/EP2016/054681
(87) Internationale Veröffentlichungsnummer: WO 2016/139353

(56) Entgegenhaltungen:
- DE-C1- 19 805 933
- DE-C2- 19 839 704
- US-A1- 2009 050 723

## Beschreibung

Die Erfindung betrifft eine Zerkleinerungsvorrichtung zum Schneiden von Lebensmitteln, insbesondere zum Schneiden von Knoblauch, mit einem ersten Gehäuseteil und einem zweiten Gehäuseteil, wobei das erste Gehäuseteil ein Schneidgitter und das zweite Gehäuseteil einen Pressstempel beinhaltet, und mit einem Gewindetrieb, mittels dem durch Drehen des ersten Gehäuseteils relativ zum zweiten Gehäuseteil in eine Drehrichtung der Pressstempel zu dem Schneidgitter bewegbar ist.

Aus DE 198 39 704 C2 ist ein Knoblauchschneider mit einem Gehäusekörper, der ein Messer trägt, bekannt. Der Knoblauchschneider weist ein Oberteil mit daran befestigtem Stempel, der im Betriebszustand beim Verdrehen gegenüber dem Gehäusekörper eine Axialbewegung gegen ein mitrotierendes Schneidgitter durchführt und mit einem den Knoblauch aufnehmenden becherartigen Innenkörper, der drehbar im Gehäusekörper gelagert ist und das Schneidgitter enthält, auf. Der Innenkörper ist mittels eines Schnapp- oder Rastmechanismus gegen Herausfallen gesichert im Gehäusekörper gehalten und zum Reinigen gegen die Wirkung des Schnapp- oder Rastmechanismus aus dem Gehäusekörper herausnehmbar.

Aus DE 199 48 168 C1 ist ein Gerät zum Schneiden von Knoblauch, Zwiebeln oder dergleichen Gemüse bekannt. Das Gerät weist einen Innenteil auf, welcher einen Aufnahmeraum mit einem einenends angeordneten Schneidgitter für das zu schneidende Gut aufweist. Außerdem weist das Gerät ein einen Stempel aufweisendes Gehäuseoberteil auf, mit dem der Aufnahmeraum anderenends verschließbar ist. Darüber hinaus beinhaltet das Gerät einen ein Messer aufweisenden Gehäusekörper, in dem das Innenteil drehbar aufgenommen ist und Gewindemittel, die in Folge einer Verdrehung des Gehäuseoberteils den Stempel in den Aufnahmeraum des mitdrehenden Innenteils hinein oder aus diesem herausfahren lassen. Die Gewindemittel sind mittels Verstellmitteln in Eingriff oder außer Eingriff bringbar, wobei das Verstellmittel axial verschiebbar am Gehäuseoberteil angeordnet ist und in einer ersten axialen Position die Gewindemittel in Eingriff und in einer zweiten unterschiedlichen axialen Position die Gewindemittel außer Eingriff bringt.

Aus DE 198 05 933 C1 ist ein Knoblauchschneider mit einem Gehäusekörper, der an seiner Unterseite ein Messer trägt, und mit einem Oberteil mit daran befestigtem Stempel, der im Betriebszustand beim Verdrehen gegenüber dem Gehäusekörper eine Axialbewegung gegen ein mitrotierendes Schneidgitter durchführt, bekannt. Der Knoblauchschneider beinhaltet einen den Knoblauch aufnehmenden Innenkörper, der drehbar im Gehäusekörper gelagert ist, der ein Schneidgitter aufweist und in den der an einer Spindel angeordnete Stempel eintaucht. Außerdem sind Mittel vorgesehen, die eine an dem Gehäusekörper angebrachte und in einem zusätzlichen Arbeitsschritt von Hand zu bedienende Überwurfmutter beinhalten und die im Betriebszustand für den Eingriff in die Spindel sorgen und im Öffnungszustand eine Längsverschiebung der Spindel zulassen.

Aus DE 102 23 075 B4 ist ein Gemüseschneider mit einem Gehäuseunterteil, das an seiner Unterseite ein Messer trägt und einen drehbaren Innenkörper mit einem Schneidgitter aufnimmt, bekannt. Der Innenkörper ist mit dem Gemüse, insbesondere Knoblauch, befüllbar. Der Gemüseschneider weist ein Gehäuseoberteil mit einem an einer Spindel angeordneten Stempel auf, der im Betriebszustand in den Innenkörper eintaucht und beim Verdrehen des Gehäuseoberteils relativ zum Gehäuseunterteil eine Axialbewegung gegen das Schneidgerät durchführt. Der Gemüseschneider weist außerdem Mittel auf, die eine in einem zusätzlichen Arbeitsschritt von Hand zu bedienende Überwurfmutter beinhalten und die im Betriebszustand für einen Eingriff in ein Gewinde der Spindel sorgen und im Öffnungszustand eine freie Axialverschiebung der Spindel beziehungsweise des Stempels zulassen, wobei die Mittel mit dem Gehäuseoberteil verbunden sind sowie die Spindel axial verschiebbar am Gehäuseoberteil geführt und von einer Vorspannung einer Feder beaufschlagt ist.

Aus DE 20 2012 003 785 U1 ist eine Vorrichtung zum Schneiden von Lebensmitteln mit einer Aufnahmekammer für das Schneidgut, die von einer Stirnwand begrenzt ist, bekannt. Die aus dieser Druckschrift bekannte Vorrichtung zum Schneiden von Lebensmitteln weist kein erstes und kein zweites Gehäuseteil auf, die relativ zueinander drehbar sind. Es ist vielmehr ein Antrieb vorgesehen, der in einem ersten Betriebszustand einen Stempel in einer Rotationsbewegung und in einem zweiten Betriebszustand in eine kombinierte Rotationsbewegung und Axialbewegung in Richtung auf eine Schneideinrichtung versetzt. Die Stirnwand trägt eine Klemmbuchse mit einem Innengewinde, durch die hindurch eine Außenwelle hindurch verläuft, die ein Außengewinde aufweist. Die Außenwelle wird von einer Antriebseinrichtung angetrieben, die einen Antriebsmotor und Antriebszahnräder beinhaltet. Die Klemmbuchse kann mittels einer elektromagnetischen Einrichtung umgeschaltet werden.

Bei Zerkleinerungsvorrichtungen, bei denen das zu zerkleinernde Gut mittels eines von einem Gewindetrieb angetriebenen Pressstempels gegen ein Schneidgitter gedrückt wird, besteht das Problem, dass der Benutzer vor dem eigentlichen Schneidvorgang eine Vielzahl von Drehungen bewirken muss, bevor der Pressstempel überhaupt das zu zerkleinernde Gut erreicht. Nachdem das zu zerkleinernde Gut durch das Schneidgitter gedrückt wurde, muss dann der Benutzer den Gewindetrieb vollständig wieder zurückdrehen, um die Zerkleinerungsvorrichtung von neuem mit Schneidgut befüllen zu können.

Aus diesem Grund ist bei allen der oben genannten, aus dem Stand der Technik bekannten Zerkleinerungsvorrichtungen die Möglichkeit geschaffen, den Gewindetrieb abzuschalten, um eine freie Axialverschiebung des Pressstempels relativ zu dem Schneidgitter ausführen zu können. Allerdings muss bei den vorbekannten Zerkleinerungsvorrichtungen hierzu separat ein Umschalter, wie beispielsweise ein axial verschiebbarer Umschaltring, bedient werden.

Es ist daher die Aufgabe der vorliegenden Erfindung, eine Zerkleinerungsvorrichtung anzugeben, die noch einfacher bedient werden kann.

Die Aufgabe wird durch eine Zerkleinerungsvorrichtung der eingangs genannten Art gelöst, die dadurch gekennzeichnet ist, dass die Zerkleinerungsvorrichtung eine Umschaltvorrichtung aufweist, die
a. die Gewinde des Gewindetriebs unabhängig von der axialen Relativstellung des ersten Gehäuseteils relativ zum zweiten Gehäuseteil automatisch in Eingriff schaltet, wenn das erste Gehäuseteil relativ zum zweiten Gehäuseteil in der Drehrichtung gedreht wird, und/oder die
b. die Gewinde des Gewindetriebs unabhängig von der axialen Relativstellung des ersten Gehäuseteils relativ zum zweiten Gehäuseteil automatisch außer Eingriff schaltet, wenn das erste Gehäuseteil relativ zum zweiten Gehäuseteil in der zur Drehrichtung entgegengesetzten Gegendrehrichtung gedreht wird.

In erfindungsgemäßer Weise wurde erkannt, dass nicht zwingend ein separat zu bedienender Umschalter vorhanden sein muss, mit dem der Benutzer zwischen einer Ineingriffstellung und einer Außereingriffstellung umschalten kann. Vielmehr kann das Bedürfnis nach einem Umschalten von der Außereingriffstellung in die Ineingriffstellung inhärent daraus geschlossen werden, dass der Benutzer genau den Drehvorgang vornimmt, der nötig ist, um den Pressstempel mittels des Gewindetriebs in Richtung auf das Schneidgitter zu bewegen. Insoweit hat die erfindungsgemäße Zerkleinerungsvorrichtung den ganz besonderen Vorteil, dass der Benutzer nach dem Einfüllen des zu schneidenden Gutes in eine Schneidgutaufnahme lediglich den Pressstempel bei Außereingriffstellung des Gewindebetriebs in axialer Richtung an das eingefüllte Gut heranzuführen braucht und dann unmittelbar und ohne einen zusätzlichen Umschalter bedienen zu müssen mit dem Drehvorgang beginnen kann, der nötig ist, um den Pressstempel mittels des Gewindetriebs in Richtung auf das Schneidgitter vorwärts zu bewegen. Hierbei erfolgt das Umschalten von der Außereingriffstellung in die Ineingriffstellung automatisch.

Bei einer hinsichtlich des In- Eingriff-Schaltens und Außer-Eingriff-Schaltens der Gewinde des Gewindetriebs auf der Basis einer Relativdrehung der Gehäuseteile automatisch arbeitenden Ausführung weist die Zerkleinerungsvorrichtung keinen separat zu bedienenden und/oder separat bedienbaren und/oder unabhängig von einem Drehen des ersten Gehäuseteils relativ zum zweiten Gehäuseteil bedienbaren Umschalter auf, mit dem zwischen einer Ineingriffstellung und einer Außereingriffstellung umgeschaltet werden kann. Vorzugsweise ist die Umschaltvorrichtung jedoch auch bei einer automatisch arbeitenden Ausführung zusätzlich separat und unabhängig von einer Drehung der Gehäuseteile relativ zueinander bedienbar; beispielsweise, indem ein Haltering relativ zu dem zweiten Gehäuseteil, insbesondere um die Axialrichtung, gedreht wird. Der Haltering kann beispielsweise drehbar an dem zweiten Gehäuseteil befestigt sein. Hierdurch ist gewährleistet, dass auch in besonderen Betriebssituationen, beispielsweise, wenn sich ein Bauteil und/oder Schneidgut verklemmt hat, ein Umschalten der Umschaltvorrichtung bewirkt werden kann.

Alternativ oder zusätzlich kann das oben geschilderte vorteilhafte Prinzip des automatischen Umschaltens vorteilhaft auch dafür realisiert sein, den Pressstempel nach einem Schneidvorgang schnell und effizient wieder aus der Schneidgutaufnahme entfernen zu können. Auch diesbezüglich kann das Bedürfnis nach einem Umschalten von der Ineingriffstellung in die Außereingriffstellung aus der Tatsache erkannt werden, dass der Benutzer genau den Gegendrehvorgang einleitet, der nötig wäre, um den Pressstempel mittels des Gewindetriebs von dem Schneidgitter weg zu bewegen. Hierbei kann vorteilhaft vorgesehen sein, dass bereits nach Ausführung eines kurzen Drehweges, beispielsweise einer Sechsteldrehung, automatisch ein Umschalten von der Ineingriffstellung in die Außereingriffstellung erfolgt, so dass der Benutzer den Pressstempel frei aus der Schneidgutaufnahme ziehen kann.

Nach einem vorteilhaften, eigenständigen und unabhängigen Erfindungsgedanken weist der Gewindetrieb ein Gewinde und ein Gegengewinde auf, wobei das zweite Gehäuseteil das Gewinde und das erste Gehäuseteil das Gegengewinde beinhaltet, insbesondere wenn die Gehäuseteile, beispielsweise für ein Einfüllen von Schneidgut räumlich voneinander getrennt sind. Eine solche Ausführung ist, da jedes Gehäuseteil jeweils eines der Gewinde (Gewinde oder Gegengewinde) des Gewindetriebs beinhaltet, besonders unkompliziert aufgebaut und besonders einfach handhabbar.

Insbesondere auch bei einer solchen Ausführung kann vorteilhaft eine Umschaltvorrichtung vorhanden sein, die die Gewinde des Gewindetriebs unabhängig von der axialen Relativstellung des ersten Gehäuseteils relativ zum zweiten Gehäuseteil automatisch in Eingriff schaltet, wenn das erste Gehäuseteil relativ zum zweiten Gehäuseteil in der Drehrichtung gedreht wird, und/oder die die Gewinde des Gewindetriebs unabhängig von der axialen Relativstellung des ersten Gehäuseteils relativ zum zweiten Gehäuseteil automatisch außer Eingriff schaltet, wenn das erste Gehäuseteil relativ zum zweiten Gehäuseteil in der zur Drehrichtung entgegengesetzten Gegendrehrichtung gedreht wird. Ebenso kann vorteilhaft vorgesehen sein, dass die Umschaltvorrichtung zusätzlich separat bedienbar ist. Dies beispielsweise, indem ein Haltering relativ zu dem zweiten Gehäuseteil, insbesondere um die Axialrichtung, gedreht wird.

Es ist bei einer Ausführung, bei der das zweite Gehäuseteil das Gewinde und das erste Gehäuseteil das Gegengewinde beinhaltet, jedoch auch möglich, dass die Umschaltvorrichtung nicht automatisch, sondern ausschließlich separat und ohne eine Drehung der Gehäuseteile relativ zueinander bedienbar ist. Eine solche Ausführung ist jedoch weniger benutzerfreundlich als eine Ausführung, deren Umschaltvorrichtung automatisch umschaltet.

Vorzugsweise ist das erste Gehäuseteil von dem zweiten Gehäuseteil zerstörungsfrei ohne eine Relativdrehung des ersten Gehäuseteils relativ zum zweiten Gehäuseteil trennbar, sobald die Gewinde des Gewindetriebs außer Eingriff geschaltet sind. Alternativ oder zusätzlich kann vorteilhaft vorgesehen sein, dass ein Axialabstand zwischen dem Pressstempel und dem Schneidgitter durch ein, insbesondere axiales, Verschieben der Gehäuseteile relativ zueinander veränderbar ist, wenn die Gewinde des Gewindetriebs außer Eingriff geschaltet sind. Alternativ oder zusätzlich kann vorteilhaft auch vorgesehen sein, dass ein Axialabstand zwischen dem Pressstempel und dem Schneidgitter durch eine reine Linearbewegung und/oder reine Axialbewegung der Gehäuseteile relativ zueinander veränderbar ist, wenn die Gewinde des Gewindetriebs außer Eingriff geschaltet sind. Dies bedeutet insbesondere, dass der Benutzer, sobald die Gewinde des Gewindetriebs außer Eingriff geschaltet sind, vorteilhaft nicht zusätzlich zu einer Linearbewegung und/oder Axialbewegung noch eine Drehung der Gehäuseteile relativ zueinander ausführen muss, um den Axialabstand zwischen dem Pressstempel und dem Schneidgitter zu verändern oder um die Gehäuseteile voneinander zu trennen.

Bei einer vorteilhaften Ausführung ist das erste Gehäuseteil mit dem zweiten Gehäuseteil nicht zerstörungsfrei auseinanderziehbar, insbesondere nicht axial auseinanderziehbar, verbunden, wenn die Gewinde des Gewindetriebs in Eingriff geschaltet sind. Insbesondere kann vorteilhaft vorgesehen sein, dass das erste Gehäuseteil von dem zweiten Gehäuseteil nicht zerstörungsfrei durch eine reine Linearbewegung oder eine reine Axialbewegung der Gehäuseteile relativ zueinander trennbar ist, wenn die Gewinde des Gewindetriebs in Eingriff geschaltet sind, und/oder dass das erste Gehäuseteil von dem zweiten Gehäuseteil nicht zerstörungsfrei ohne eine Relativdrehung des ersten Gehäuseteils relativ zum zweiten Gehäuseteil trennbar ist, wenn die Gewinde des Gewindetriebs in Eingriff geschaltet sind. Insbesondere kann die Zerkleinerungsvorrichtung derart ausgebildet sein, dass ein Axialabstand zwischen dem Pressstempel und dem Schneidgitter ausschließlich durch Drehen der Gehäuseteile relativ zueinander bewirkbar ist, solange die Gewinde des Gewindetriebs in Eingriff geschaltet sind.

Bei einer besonderen Ausführung weist das Gewinde des zweiten Gehäuseteils mehrere Gewindesegmente auf. Alternativ oder zusätzlich kann auch vorgesehen sein, dass das Gegengewinde des ersten Gehäuseteils mehrere Gegengewindesegmente aufweist.

Bei einer besonderen Ausführung sind in dem zweiten Gehäuseteil mehrere in Umfangsrichtung verteilte Gewindesegmente angeordnet, die radial bewegbar gehalten sind. Insbesondere können in dem zweiten Gehäuseteil mehrere in Umfangsrichtung verteilte Gewindesegmente angeordnet sein, die jeweils gegen eine Federkraft radial, insbesondere nach innen, bewegbar gelagert sind.

Bei einer besonders vorteilhaften Ausführung sind in dem zweiten Gehäuseteil mehrere in Umfangsrichtung verteilte Federzungen mit jeweils einem Gewindesegment angeordnet, deren Gewindesegmente federelastisch radial nach innen bewegt werden können. Alternativ oder zusätzlich kann auch vorgesehen sein, dass in dem zweiten Gehäuseteil mehrere in Umfangsrichtung verteilte Federzungen mit jeweils einem Gewindesegment angeordnet sind, deren freie Enden federelastisch radial nach innen bewegbar sind. Insbesondere bei einer solchen Ausführung ist es von Vorteil, wenn die Gewindesegmente am freien Ende der Federzunge angeordnet sind.

In vorteilhafter Weise kann die Umschaltvorrichtung mehrere Anlaufschrägen aufweisen, die die Gewindesegmente radial nach innen bewegen, wenn das erste Gehäuseteils relativ zum zweiten Gehäuseteil in der Drehrichtung gedreht wird. Alternativ oder zusätzlich kann auch vorgesehen sein, dass die Umschaltvorrichtung mehrere Anlaufschrägen aufweist, die eine Bewegung der Gewindesegmente radial nach außen freigeben, wenn das erste Gehäuseteil in der Gegendrehrichtung gedreht wird.

Beispielsweise können die Anlaufschrägen an einem Umschaltring angeordnet oder gemeinsam einstückig mit einem Umschaltring hergestellt sein. Bei einer vorteilhaften Ausführung sind die Anlaufschrägen an einem Umschaltring angeordnet, der, zumindest in Bezug auf Drehmomente in Axialrichtung, drehfest mit dem zweiten Gehäuseteil verbunden ist und/oder der drehfest in dem zweiten Gehäuseteil gelagert ist. Um ein Umschalten zu bewirken, müssen die Anlaufschrägen und/oder der Umschaltring von außen nicht zugänglich sein, da der Umschaltring nicht als separat zu betätigender Umschalter fungiert.

Insoweit kann vorteilhaft vorgesehen sein, dass die Anlaufschrägen zumindest in Bezug auf Drehmomente, die in Axialrichtung wirken, drehfest mit dem zweiten Gehäuseteil verbunden sind und/oder dass die Anlaufschrägen innerhalb des zweiten Gehäuseteils angeordnet sind.

Bei einer vorteilhaften Ausführung sind die Gewindesegmente in einem begrenzten Winkelbereich, insbesondere in einem Winkelbereich von 45 Grad oder von 30 Grad, drehbar innerhalb des zweiten Gehäuseteils gelagert. Insbesondere kann vorteilhaft vorgesehen sein, dass die Gewindesegmente drehfest innerhalb eines Käfigs angeordnet sind, der in einem begrenzten Winkelbereich, insbesondere in einem Winkelbereich von 45 Grad oder von 30 Grad, drehbar innerhalb des zweiten Gehäuseteils gelagert ist.

Die Drehbarkeit der Gewindesegmente relativ zu dem zweiten Gehäuseteil um einen begrenzten Winkel dient dem Umschalten des Gewindetriebs von der Ineingriffstellung in die Außereingriffstellung oder umgekehrt von der Außereingriffstellung in die Ineingriffstellung; je nach Drehrichtung. Nach einem Umschaltvorgang gelangen die Gewindesegmente, beispielsweise über einen Käfig, an dem diese befestigt sind, zu dem zweiten Gehäuseteil in Drehanschlag. Nach einem Umschaltvorgang von der Außereingriffstellung in die Ineingriffstellung kann der Pressstempel durch Fortsetzen der Drehbewegung mittels des Gewindetriebs in Richtung auf das Schneidgitter bewegt werden.

Bei einer besonderen Ausführung sind die Gewindesegmente und/oder die Federzungen, zumindest bezogen auf Drehmomente in Axialrichtung, direkt oder indirekt drehfest mit dem Pressstempel verbunden. Wenn der Pressstempel zusätzlich, was weiter unten noch im Detail erläutert ist, relativ zu dem zweiten Gehäuseteil, zumindest in einem begrenzten Winkelbereich, drehbar ist, kann eine Relativdrehung des Pressstempels und der mit ihm verbundenen Gewindesegmente relativ zu dem zweiten Gehäuseteil genutzt werden, um die Gewindesegmente, beispielsweise mithilfe der Anlaufschrägen, radial zu bewegen und, je nach Drehrichtung der Relativdrehung, mit dem Gegengewinde des Gewindetriebs in Eingriff oder außer Eingriff zu bringen.

Bei einer ganz besonders vorteilhaften Ausführung weist der Käfig, mit dem der Pressstempel drehfest verbunden ist, in Umfangsrichtung verteilt mehrere Ausnehmungen für die Gewindesegmente und/oder die Federzungen auf. Insbesondere kann vorteilhaft vorgesehen sein, dass der
Käfig in Umfangsrichtung verteilt mehrere Ausnehmungen aufweist, in denen die Gewindesegmente und/oder die freien Enden der Federzungen radial beweglich angeordnet sind. Die Ausnehmungen haben den Vorteil, dass die Federzungen in Tangentialrichtung geführt sind. Dies wirkt sich insbesondere dann vorteilhaft aus, wenn Tangentialkräfte auf die Gewindesegmente und/oder die Federzungen wirken; beispielsweise wenn bei einem Schneidvorgang das zweite Gehäuseteil relativ zum ersten Gehäuseteil gedreht wird und die Gewindesegmente an dem Gegengewinde entlang gleiten.

Insbesondere können die Gewindesegmente und/oder die Federzungen bezogen auf Drehmomente in Axialrichtung drehfest mit dem Käfig verbunden sein. Auf diese Weise kann über den Käfig vorteilhaft eine einfache drehfeste Verbindung mit dem Pressstempel hergestellt sein. Insbesondere kann vorteilhaft vorgesehen sein, dass jede Federzunge mit einem ihrer Enden fest mit dem Käfig verbunden ist, während das andere Ende, das insbesondere das Gewindesegment aufweisen kann, relativ zu dem Käfig radial bewegbar ist. Die drehfeste Verbindung kann beispielsweise dadurch hergestellt sein, dass ein Ende der Federzunge formschlüssig in eine Aufnahme des Käfigs eingeführt ist.

Bei einer ganz besonders vorteilhaften Ausführung sind der Pressstempel und/oder der Käfig drehfest mit einem, insbesondere von außen zugänglichen, Haltering verbunden. Wie weiter unten noch im Detail erläutert wird, kann mit Hilfe des Halterings der Drehwiderstand zum Drehen des Pressstempels dadurch erhöht werden, dass der Benutzer den Haltering von außen festhält. Dies ist insbesondere dann von Vorteil, wenn der Drehwiderstand zum Drehen des Pressstempels, beispielsweise weil gerade kein Schneidgut in die Schneidgutaufnahme eingefüllt ist und/oder vor dem Aufsetzen des zweiten Gehäuseteils auf das erste Gehäuseteil und/oder vor einem Einführen des Presstempels in die Schneidgutaufnahme, niedriger ist, als der Drehwiderstand zum Umschalten des Gewindetriebs von der Ineingriffstellung in die Außereingriffstelllung bzw. von der Außereingriffstelllung in die Ineingriffstellung.

Beispielsweise kann vorteilhaft vorgesehen sein, dass der Käfig zylinderförmig ausgebildet ist, wobei an einem Ende des Käfigs der Haltering und an dem anderen Ende der Pressstempel und/oder die Federzungen befestigt sind. Eine solche Ausführung ist einerseits besonders kompakt und darüber hinaus besonders funktional, weil der Käfig mehrere Bauteile in vorteilhafter Weise lagert und miteinander verbindet.

Wie bereits erwähnt, kann vorteilhaft vorgesehen sein, dass die Gewindesegmente in der Ineingriffstellung des Gewindetriebs mit einem Gegengewinde des Gewindetriebs in Eingriff stehen und in der Außereingriffstelllung des Gewindetriebs von dem Gegengewinde des Gewindetriebs beabstandet sind. Wie ebenfalls bereits erläutert, kann die Zerkleinerungsvorrichtung in der Weise ausgeführt sein, dass die Gewindesegmente mit Hilfe von Anlaufschrägen radial bewegt und damit mit dem Gegengewinde in Eingriff gebracht werden können, sobald das erste Gehäuseteil relativ zum zweiten Gehäuseteil in der Drehrichtung gedreht wird. Analog kann vorteilhaft vorgesehen sein, dass die Gewindesegmente sich, insbesondere durch Federkraft, radial wieder von dem Gegengewinde weg bewegen und damit außer Eingriff gelangen, sobald das erste Gehäuseteil relativ zum zweiten Gehäuseteil in der zur Drehrichtung entgegengesetzten Gegendrehrichtung gedreht wird.

Beispielsweise kann das erste Gehäuseteil das Gegengewinde des Gewindetriebs aufweisen. Insbesondere kann vorteilhaft vorgesehen sein, dass das erste Gehäuseteil das Gegengewinde aufweist, das auf der Außenseite des ersten Gehäuseteils angeordnet und als Außengewinde ausgebildet ist. Bei einer besonderen Ausführung, bei der die Gewindesegmente innerhalb des zweiten Gehäuseteils angeordnet sind, wird das zweite Gehäuseteil nach dem Einfüllen des zu schneidenden Gutes in eine Schneidgutaufnahme, die innerhalb des ersten Gehäuseteils angeordnet ist, bei Außereingriffstellung des Gewindetriebs über das erste Gehäuseteil gestülpt, bis der Pressstempel mit dem zu schneidenden Gut in Kontakt kommt. Anschließend wird das zweite Gehäuseteil relativ zu dem ersten Gehäuseteil gedreht, wodurch die Gewinde des Gewindetriebs unabhängig von der dann vorliegenden axialen Relativstellung des ersten Gehäuseteils relativ zum zweiten Gehäuseteil automatisch in Eingriff geschaltet werden und der Pressstempel dann von dem Gewindetrieb in Richtung auf das Schneidgitter zu bewegt wird.

Bei einer vorteilhaften Ausführung weist die Zerkleinerungsvorrichtung eine Schneidgutaufnahme auf, die rotierbar in dem ersten Gehäuseteil gelagert ist und in die der Pressstempel einführbar ist. Insbesondere kann vorteilhaft vorgesehen sein, dass die Schneidgutaufnahme dem Schneidgitter gegenüberliegend eine Öffnung für den Pressstempel aufweist.

An der Schneidgutaufnahme kann das Schneidgitter, insbesondere wieder lösbar, befestigt sein. Das Schneidgitter kann beispielsweise mit einer Rast- oder einer Bajonettverbindung an der Schneidgutaufnahme befestigt sein. Eine solche Ausführung hat den besonderen Vorteil, dass das Schneidgitter für einen Reinigungsvorgang abgenommen und einfacher gereinigt werden kann. Allerdings ist es auch möglich, dass das Schneidgitter fest an der Schneidgutaufnahme befestigt ist. Eine solche Ausführung ist besonders kostengünstig herstellbar.

Um zu gewährleisten, dass der Pressstempel seine Rotationsbewegung auf die Schneidgutaufnahme und das sich mitdrehende Schneidgitter überträgt, kann vorteilhaft vorgesehen sein, dass der Pressstempel in einem Querschnitt senkrecht zur Axialrichtung eine von der Kreisform abweichende Außenkontur aufweist und die Schneidgutaufnahme in einem Querschnitt senkrecht zur Axialrichtung eine komplementäre Innenkontur aufweist.

Bei einer ganz besonders vorteilhaften Ausführung und nach einem unabhängigen Erfindungsgedanken, der auch losgelöst davon umsetzbar ist, ob der Gewindetrieb freischaltbar ist oder nicht, ist vorgesehen, dass der Pressstempel an seinem freien Ende mehrere Pressvorsprünge aufweist, die in die Zwischenräume zwischen den Klingen des Schneidgitters einführbar sind, und dass ein Reinigungsgitter gegen die Kraft einer Federvorrichtung axial verschiebbar zwischen den Pressvorsprüngen gelagert ist, das wenigstens einen radial über die Außenkontur des Pressstempels hervorstehenden Anschlag aufweist, der an einem Gegenanschlag der Schneidgutaufnahme anschlägt und das Reinigungsgitter zu den Klingen des Schneidgitters auf Abstand hält, wenn die Pressvorsprünge in die Zwischenräume zwischen den Schneidklingen des Schneidgitters eintauchen. Auf diese Weise ist vorteilhaft sichergestellt, dass die Schneidklingen des Schneidgitters das Reinigungsgitter nicht beschädigen und dass die Schneidklingen durch ein wiederholtes Anschlagen des Reinigungsgitters nicht abstumpfen.

Bei einer ganz besonders vorteilhaften Ausführung sind der Drehwiderstand zum Umschalten von der Ineingriffstellung des Gewindetriebs in die Außereingriffstelllung und/oder der Drehwiderstand zum Umschalten von der Außereingriffstelllung des Gewindetriebs in die Ineingriffstellung kleiner, als der Drehwiderstand zum Drehen der Schneidgutaufnahme relativ zum ersten Gehäuseteil. Dies kann beispielsweise derart realisiert sein, dass die Gewindesegmente und/oder die Federzungen, die mit dem Pressstempel drehfest verbunden sind, der wiederum drehfest in die rotierbar angeordnete Schneidgutaufnahme eingreift, durch die Reibung der Schneidgutaufnahme an dem ersten Gehäuseteil derart relativ zum zweiten Gehäuseteil gebremst sind, dass Sie mittels der Anlaufschrägen, die drehfest mit dem zweiten Gehäuseteil verbunden sind, radial bewegt werden können, ohne tangential auszuweichen. Wie bereits erwähnt, kann vorteilhaft ein Haltering oder ein ähnliches Bauteil vorhanden sein, um die Gewindesegmente und/oder die Federzungen relativ zum zweiten Gehäuseteil festhalten zu können, um auch dann ein Umschalten bewirken zu können, wenn der Drehwiderstand der Gewindesegmente und der mit ihnen drehverbundenen Bauteile zu gering ist, beispielsweise weil das zweite Gehäuseteil noch gar nicht auf das erste Gehäuseteil aufgesetzt ist und/oder weil der Pressstempel noch nicht in die Schneidgutaufnahme eingeführt ist.

Durch das Hindurchdrücken des Schneidgutes durch das sich mitdrehende Schneidgitter wird das Schneidgut in Stangen geschnitten. In vorteilhafter Weise kann das erste Gehäuseteil benachbart zum Schneidgitter eine radial ausgerichtete, sich nicht mitdrehende Abtrennklinge aufweisen, die sich über die Hälfte des Öffnungsquerschnitts des Schneidgitters erstreckt. Die Abtrennklinge dient dazu, von den Stangen Würfel abzutrennen. Insbesondere kann vorteilhaft vorgesehen sein, dass die abgetrennten Würfel in einen unterhalb des Schneidgitters und unterhalb der Abtrennklinge angeordneten Auffangbehälter fallen. Ganz allgemein kann vorteilhaft ein Auffangbehälter vorgesehen sein, der an dem ersten Gehäuseteil festlegbar ist und/oder der zumindest teilweise in das erste Gehäuseteil einführbar ist.

Bei einer vorteilhaften Ausführung ist ein Deckel vorhanden, der auf den Auffangbehälter aufgesetzt werden kann, um die Öffnung des nach einem Zerkleinerungsvorgang entnommenen Auffangbehälters zu verschließen. Der Deckel kann vorteilhaft derart ausgebildet sein, dass er wenigstens im Bereich der Öffnung an dem Auffangbehälter, insbesondere durch Klemmen und/oder Verrasten, festgelegt werden kann. Von besonderem Vorteil ist eine Ausführung, bei der der Deckel von außen an der Bodenseite des Auffangbehälters, insbesondere durch Klemmen und/oder Verrasten, festgelegt werden kann. Bei einer solchen Ausführung kann der Deckel vorteilhaft zusätzlich als Standfuß dienen. Insbesondere hierfür ist es von Vorteil, wenn der Deckel aus einem rutschhemmenden und/oder elastischen Material, wie beispielsweise Gummi hergestellt ist. Außerdem hat eine solche Ausführung den Vorteil, dass der Deckel bei Nichtgebrauch mit den übrigen Teilen der Zerkleinerungsvorrichtung verbunden verstaut werden kann.

In der Zeichnung ist der Erfindungsgegenstand beispielhaft und schematisch dargestellt und wird anhand der Figuren nachfolgend beschrieben, wobei gleiche oder gleich wirkende Elemente zumeist mit denselben Bezugszeichen versehen sind. Dabei zeigen:
- Fig. 1: ein Ausführungsbeispiel einer erfindungsgemäßen Zerkleinerungsvorrichtung in einer Einfüllstellung,
- Fig. 2: das Ausführungsbeispiel der erfindungsgemäßen Zerkleinerungsvorrichtung nach dem Zusammenfügen des ersten Gehäuseteils und des zweiten Gehäuseteils,
- Fig. 3: das Ausführungsbeispiel der erfindungsgemäßen Zerkleinerungsvorrichtung nach dem Schneidvorgang,
- Fig. 4: eine Detaildarstellung des Ausführungsbeispiels,
- Fig. 5: eine Explosionsdarstellung, die einige der im zweiten Gehäuseteil angeordneten Bauteile erkennen lässt,
- Fig. 6: eine Explosionsdarstellung des Ausführungsbeispiels der erfindungsgemäßen Zerkleinerungsvorrichtung,
- Fig. 7: eine perspektivische Darstellung des ersten und des zweiten Gehäuseteils,
- Fig. 8: eine Längsschnittdarstellung bei Ineingriffstellung,
- Fig. 9: eine Querschnittdarstellung bei Ineingriffstellung,
- Fig. 10: eine Längsschnittdarstellung bei Außereingriffstellung,
- Fig. 11: eine Querschnittdarstellung bei Außereingriffstellung,

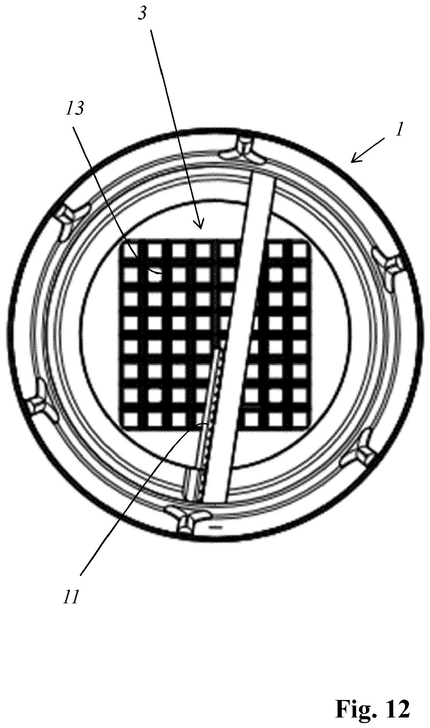

- Fig. 12: eine Ansicht von unten,
- Fig. 13: eine Längsschnittdarstellung zur Erläuterung der Reinigungsfunktion für die Pressvorsprünge des Pressstempels, und
- Fig. 14: eine Detaildarstellung der Schneidgutaufnahme.

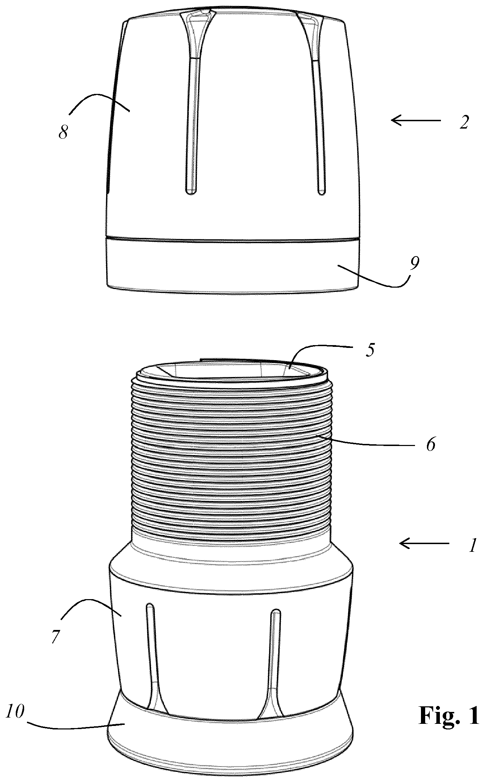

Fig. 1 zeigt eine Zerkleinerungsvorrichtung zum Schneiden von Lebensmitteln, insbesondere zum Schneiden von Knoblauch, mit einem ersten Gehäuseteil 1 und einem zweiten Gehäuseteil 2, wobei das erste Gehäuseteil 1 ein in dieser Figur nicht sichtbares Schneidgitter 3 und das zweite Gehäuseteil einen in dieser Figur nicht sichtbaren Pressstempel 4 beinhaltet. Die Zerkleinerungsvorrichtung weist einen Gewindetrieb auf, mittels dem durch Drehen des ersten Gehäuseteils 1 relativ zum zweiten Gehäuseteil 2 in eine Drehrichtung der Pressstempel 4 zu dem Schneidgitter 3 bewegbar ist. Als Teil des Gewindetriebs weist das erste Gehäuseteil 1 ein Außengewinde 6 auf.

Außerdem weist das erste Gehäuseteil 1 einen ersten Griffabschnitt 7 auf, an dem das erste Gehäuseteil 1 gehalten werden kann. Darüber hinaus weist das zweite Gehäuseteil 2 einen zweiten Griffabschnitt 8 auf, an dem das zweite Gehäuseteil 2 gehalten werden kann. Außerdem befindet sich an dem zweiten Gehäuseteil 2 ein Haltering 9, dessen Funktion weiter unten beschrieben ist.

Die Zerkleinerungsvorrichtung weist eine Umschaltvorrichtung auf, die die Gewinde des Gewindetriebs unabhängig von der axialen Relativstellung des ersten Gehäuseteils 1 relativ zum zweiten Gehäuseteil 2 automatisch in Eingriff schaltet, wenn das erste Gehäuseteil 1 relativ zum zweiten Gehäuseteil 2 in der Drehrichtung gedreht wird, und die die Gewinde des Gewindetriebs unabhängig von der axialen Relativstellung des ersten Gehäuseteils 1 relativ zum zweiten Gehäuseteil 2 automatisch außer Eingriff schaltet, wenn das erste Gehäuseteil 1 relativ zum zweiten Gehäuseteil 2 in der zur Drehrichtung entgegengesetzten Gegendrehrichtung gedreht wird.

In dem ersten Gehäuseteil 1 ist eine Schneidgutaufnahme 5 rotierbar gelagert. In der gezeigten Stellung des ersten Gehäuseteils 1 und des zweiten Gehäuseteils 2 kann Schneidgut, beispielsweise Knoblauch, von oben durch eine Öffnung in die Schneidgutaufnahme 5 eingefüllt werden.

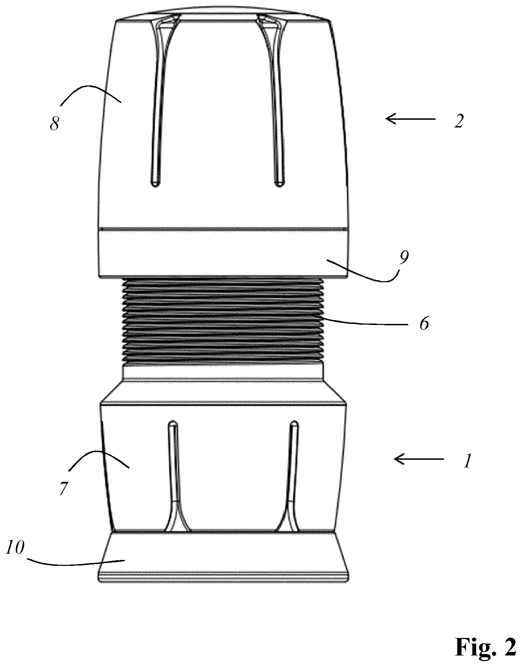

Anschließend wird das erste Gehäuseteil 1 auf das zweite Gehäuseteil 2 aufgesetzt, wobei sich die Umschaltvorrichtung in der Außereingriffstellung befindet und wobei der in dem zweiten Gehäuseteil 2 angeordnete (in dieser Figur nicht sichtbare) Pressstempel 4 axial in die Öffnung der Schneidgutaufnahme 5 eingeführt wird, bis er auf das Schneidgut aufsetzt. Diese Situation ist in Figur 2 dargestellt.

Der Benutzer kann nun unmittelbar und ohne einen zusätzlichen Umschalter bedienen zu müssen mit dem Drehvorgang beginnen, der nötig ist, um den Pressstempel 4 mittels des Gewindetriebs in Richtung auf das Schneidgitter 3 vorwärts zu bewegen. Hierbei wird das zweite Gehäuseteil 2 relativ zum ersten Gehäuseteil 1 in Uhrzeigerrichtung gedreht. Durch das Einleiten des Drehvorganges erfolgt automatisch ein Umschalten des Gewindetriebs von der Außereingriffstellung in die Ineingriffstellung.

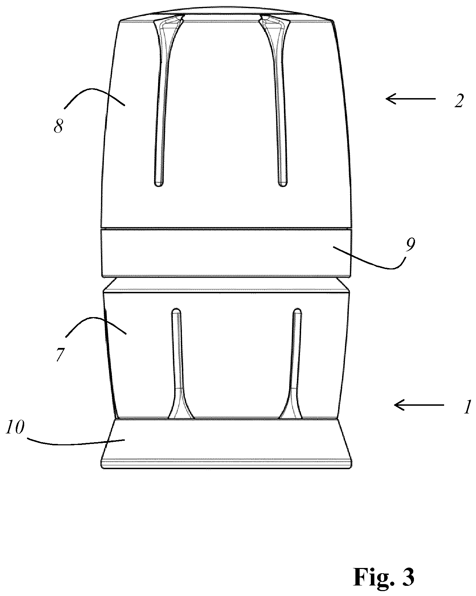

Der Benutzer setzt den Drehvorgang so lange fort, bis das gesamte Schneidgut durch das Schneidgitter 3 gedrückt ist; nämlich so weit, bis der Pressstempel 4 das Schneidgitter 3 erreicht hat. Diese Situation ist in Figur 3 dargestellt.

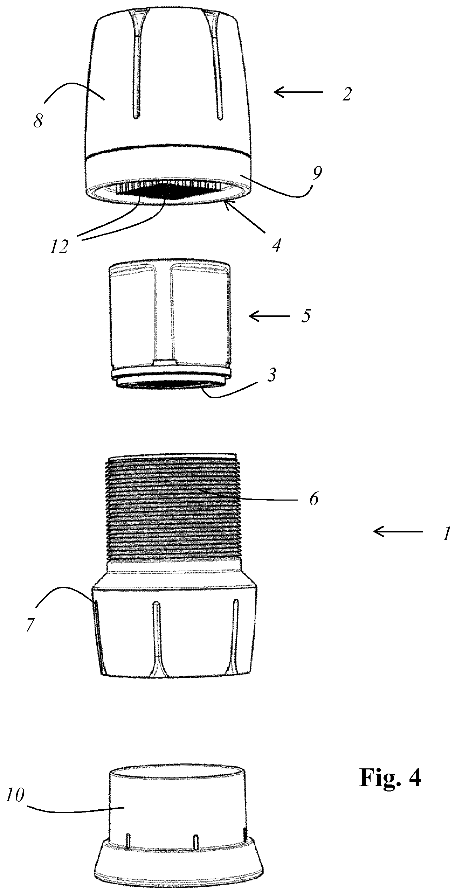

Figur 4 zeigt eine Detaildarstellung der Zerkleinerungsvorrichtung, die insbesondere das erste Gehäuseteil 1 und die in dem ersten Gehäuseteil rotierbar gelagerte Schneidgutaufnahme 5 erkennen lässt. An der Schneidgutaufnahme 5 ist auf der der Öffnung abgewandten Seite das Schneidgitter 3 befestigt.

Die Zerkleinerungsvorrichtung weist außerdem einen Auffangbehälter 10 auf, der von unten in das erste Gehäuseteil 1 eingeschoben werden kann und der die durch das Schneidgitter 3 gedrückte und von einer in dieser Figur nicht sichtbaren Abtrennklinge 11 abgetrennten Würfel auffängt.

Der Pressstempel 4 weist an seinem freien Ende Pressvorsprünge 12 auf, die gegen Ende des Schneidvorganges in die Zwischenräume zwischen die Schneidklingen 13 des Schneidgitters 3 eintauchen.

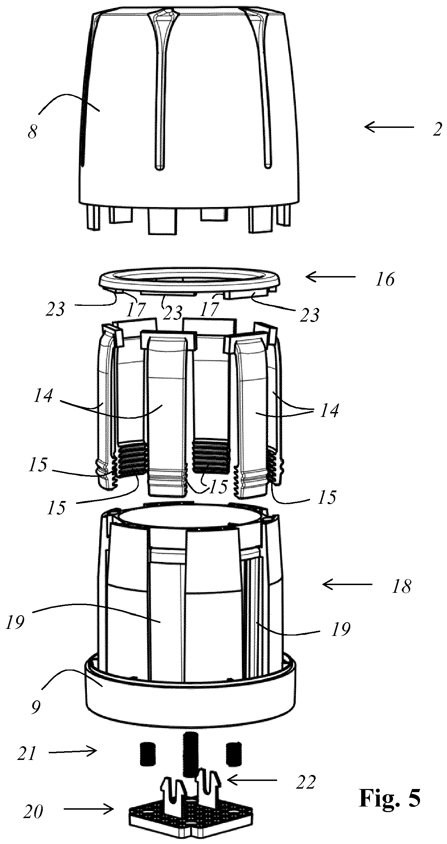

Figur 5 zeigt eine Explosionsdarstellung, die einige der im zweiten Gehäuseteil 2 angeordneten Bauteile erkennen lässt. Der Pressstempel 4 ist der besseren Übersicht halber in dieser Figur nicht dargestellt.

Es sind mehrere in Umfangsrichtung verteilte Federzungen 14 mit jeweils einem Gewindesegment 15 in dem zweiten Gehäuseteil 2 drehfest zum (nicht dargestellten) Pressstempel 4 angeordnet, deren Gewindesegmente 15 federelastisch radial nach innen bewegt werden können.

Um die Federzungen 14 radial nach innen zu bewegen, sind an einem Umschaltring 16 Anlaufschrägen 17 leicht schräg zur Tangentialrichtung ausgerichtet angeordnet. Der Umschaltring 16 ist drehfest in dem zweiten Gehäuseteil 2 angeordnet. Wird der Umschaltring 16 in Drehrichtung relativ zu den Federzungen 14 gedreht, werden deren freie Enden durch die Anlaufschrägen 17 radial nach innen gedrückt, um mit dem Außengewinde 6 in Eingriff zu gelangen. Wird der Umschaltring 16 in Gegendrehrichtung gedreht, werden die Federzungen 14 wieder freigegeben und bewegen sich radial nach außen, um den Gewindetrieb freizugeben, so dass das zweite Gehäuseteil 2 relativ zum ersten Gehäuseteil 1 axial wieder frei bewegbar ist.

Der Pressstempel 4 ist drehfest und koaxial innerhalb eines Käfigs 18 angeordnet, der in einem begrenzten Winkelbereich, insbesondere in einem Winkelbereich von 45 Grad oder von 30 Grad, drehbar innerhalb des zweiten Gehäuseteils 2 gelagert ist.

Der Käfig 18 weist in Umfangsrichtung verteilt mehrere Ausnehmungen 19 für die Federzungen 14 auf. Die Federzungen 14 sind in den Ausnehmungen 19 derart angeordnet, dass deren freie Enden radial beweglich sind. Die oberen Enden der Federzungen 14 sind unbeweglich an dem Käfig 18 befestigt. An dem Käfig 18 ist außerdem der Haltering 9 drehfest befestigt.

Wie bereits erwähnt, weist der (in Figur 5 nicht dargestellte) Pressstempel 4 an seinem freien Ende mehrere Pressvorsprünge 12 auf, die in die Zwischenräume zwischen den Schneidklingen 13 des Schneidgitters 3 einführbar sind. Darüber hinaus ist ein Reinigungsgitter 20 gegen die Kraft einer Federvorrichtung 21 axial verschiebbar zwischen den (in Figur 5 nicht dargestellten) Pressvorsprüngen gelagert. Die Federvorrichtung 21 drückt das Reinigungsgitter 20 an das freie Ende des Pressstempels 4, so dass dieses bündig mit den Pressvorsprüngen 12 abschließt. Eine Rastvorrichtung 22 verhindert, dass das Reinigungsgitter 20 vom Pressstempel 4 herunter gedrückt wird.

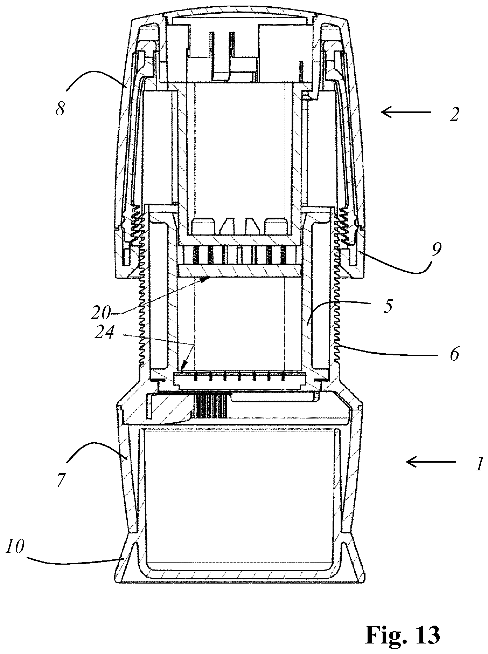

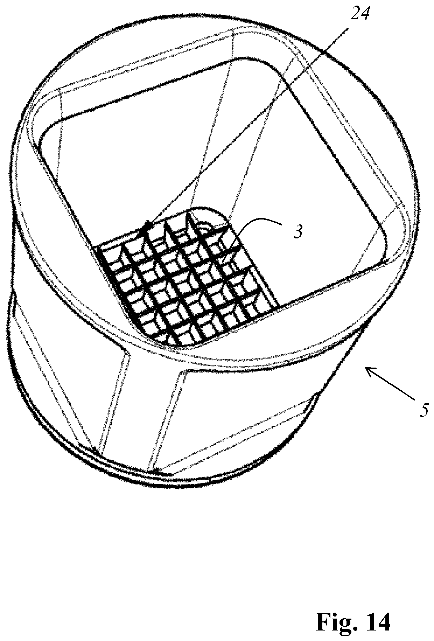

Das Reinigungsgitter 20 weist mehrere radial über die Außenkontur des Pressstempels 4 hervorstehende Anschläge auf, die an Gegenanschlägen 24 der Schneidgutaufnahme 5 anschlagen und das Reinigungsgitter 20 zu den Schneidklingen des Schneidgitters 3 auf Abstand hält, wenn die Pressvorsprünge 12 in die Zwischenräume zwischen den Schneidklingen des Schneidgitters 3 eintauchen. Dies ist insbesondere in den Figuren 13 und 14 deutlich zu erkennen.

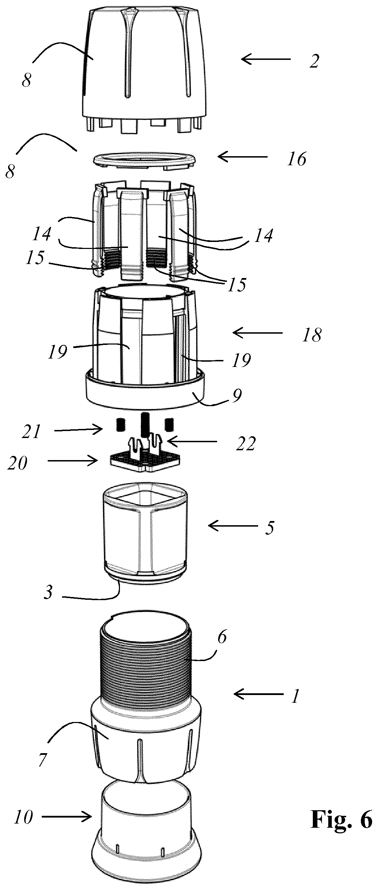

Figur 6 zeigt eine Explosionsdarstellung des Ausführungsbeispiels der erfindungsgemäßen Zerkleinerungsvorrichtung.

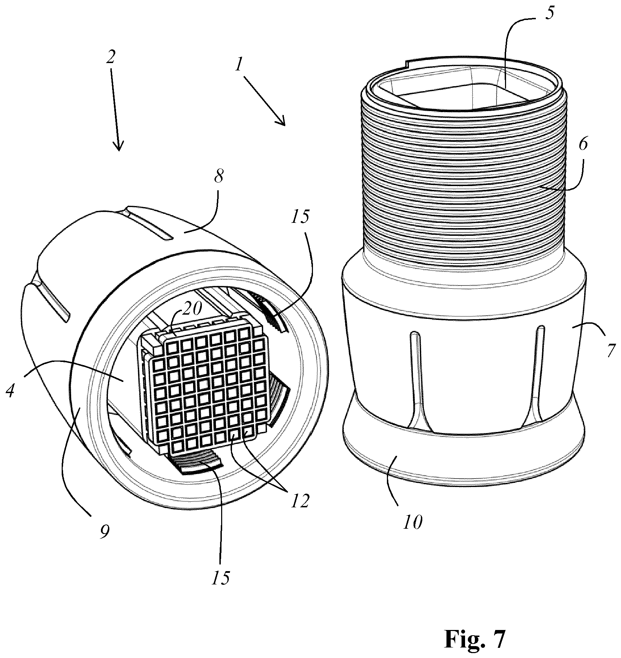

Um zu gewährleisten, dass der Pressstempel 4 seine Rotationsbewegung auf die Schneidgutaufnahme 5 und dass sich mitdrehende Schneidgitter 3 überträgt, weist der Pressstempel 4 in einem Querschnitt senkrecht zur Axialrichtung eine von der Kreisform abweichende Außenkontur, nämlich eine quadratische Außenkontur, auf, was insbesondere in Figur 7 deutlich zu erkennen ist. Entsprechend weist die Schneidgutaufnahme 5 in einem Querschnitt senkrecht zur Axialrichtung eine komplementäre Innenkontur auf.

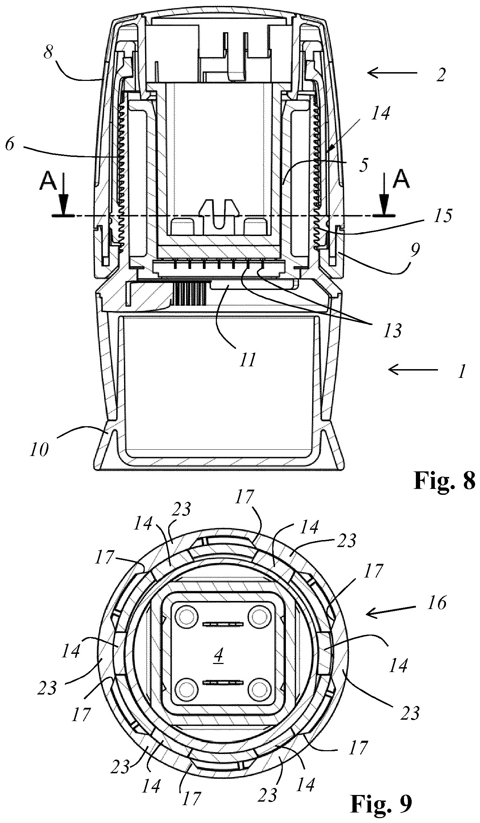

Figur 8 zeigt eine Längsschnittdarstellung des Ausführungsbeispiels der erfindungsgemäßen Zerkleinerungsvorrichtung bei Ineingriffstellung des Gewindetriebs. Es ist zu erkennen, dass bei dieser Ineingriffstellung die Gewindesegmente 15 der Federzungen 14 in das Außengewinde 6 eingreifen, so dass der Pressstempel 4 durch Drehen des zweiten Gehäuseteils 2 relativ zum ersten Gehäuseteil 1 in Richtung auf das Schneidgitter 3 bewegt werden kann.

Figur 8 zeigt außerdem die radial ausgerichtete Abtrennklinge 11. Durch das Hindurchdrücken des Schneidgutes durch das sich mitdrehende Schneidgitter 3 wird das Schneidgut in Stangen geschnitten. Mittels der benachbart zum Schneidgitter 3 angeordneten, sich nicht mitdrehenden Abtrennklinge 11 werden von den Stangen Würfel abgetrennt, die in den Auffangbehälter 10 fallen.

Figur 9 zeigt eine Querschnittsdarstellung entlang der in Figur 8 eingetragenen Schnittlinie A-A. Es ist zu erkennen, dass der Umschaltring 16 nach innen gerichtete Vorsprünge 23 mit den daran ausgebildeten Anlaufschrägen 17 aufweist. Die Vorsprünge 23 halten in der in Figur 9 dargestellten Stellung die freien Enden der Federzungen 14 in einer radial nach innen verschobenen Position. In dieser Ineingriffstellung stehen die Gewindesegmente 15 mit dem Außengewinde 6 in Eingriff.

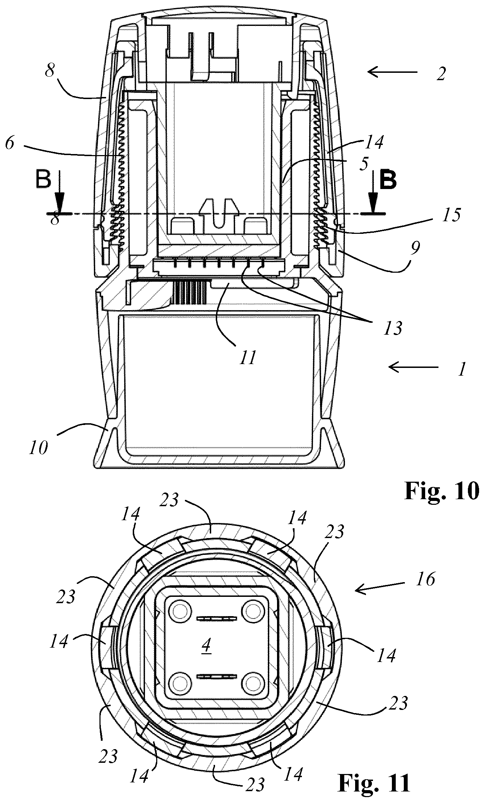

Figur 10 zeigt eine Längsschnittdarstellung des Ausführungsbeispiels der erfindungsgemäßen Zerkleinerungsvorrichtung bei Außereingriffstellung des Gewindetriebs. In dieser Stellung sind die freien Enden der Federzungen 14 radial nach außen verschoben, so dass sie nicht in das Außengewinde 6 eingreifen. Wie Figur 11 zeigt, sind in der Außereingriffstellung die freien Enden der Federzungen 14 radial nach außen verschoben zwischen den Vorsprüngen 23 des Umschaltrings 16 angeordnet.

Insbesondere wenn Schneidgut in die Schneidgutaufnahme 5 eingefüllt ist und der Pressstempel 4 in Kontakt zum Schneidgut steht, wodurch die Schneidgutaufnahme 5 gegen das erste Gehäuseteil 1 gedrückt und bei einer Drehung reibend an dem erste Gehäuseteil 1 gleitet, ist der Drehwiderstand zum Umschalten des Gewindetriebs kleiner, als der Drehwiderstand zum Drehen der Schneidgutaufnahme 5 relativ zum ersten Gehäuseteil 1. Die Federzungen 14, die über den Käfig 18 mit dem Pressstempel 4 drehfest verbunden sind, der wiederum drehfest in die rotierbar angeordnete Schneidgutaufnahme 5 eingreift, sind durch die Reibung der Schneidgutaufnahme 5 derart gebremst, dass Sie mittels der Vorsprünge 23, die die Anlaufschrägen 17 aufweisen und die drehfest mit dem zweiten Gehäuseteil 2 verbunden sind, radial bewegt werden können, ohne tangential auszuweichen.

Der Haltering 9 dient dazu, die Federzungen 14 relativ zum zweiten Gehäuseteil 2 festhalten zu können, um auch dann ein Umschalten bewirken zu können, wenn der Drehwiderstand der Gewindesegmente 15 und der mit ihnen drehverbundenen Bauteile zu gering ist, beispielsweise weil gerade kein Schneidgut in die Schneidgutaufnahme eingefüllt ist oder weil das zweite Gehäuseteil 2 noch gar nicht auf das erste Gehäuseteil 1 aufgesetzt ist oder weil der Pressstempel 4 noch nicht in die Schneidgutaufnahme 5 eingeführt ist. Ohne ein manuelles Festhalten würden die Federzungen 14 in einer solchen Situation von den Vorsprüngen 23 mitgedreht, ohne dass damit eine radiale Verschiebung der Gewindesegmente 15 und ein Umschalten des Gewindetriebs einherginge.

Sollten sich die Gewindesegmente 15 vor dem Aufsetzen des zweiten Gehäuseteils 2 auf das erste Gehäuseteil 1 in einer radial nach innen verschobenen Position befinden, so sollte der Benutzer zunächst, um eine freie axiale Verschiebbarkeit erreichen zu können, eine Relativdrehung des zweiten Gehäuseteils 2 samt dem mit ihm drehfest verbundenen Umschaltring 16 relativ zum Haltering 9 und damit relativ zu den Gewindesegmenten 15 bewirken, um die Gewindesegmente 15 freizugeben, damit sie radial nach außen schwingen können.

Nachdem Schneidgut in die Schneidgutaufnahme 5 eingefüllt ist und der in dem zweiten Gehäuseteil 2 angeordnete Pressstempel 4 axial in die Schneidgutaufnahme 5 eingeführt und mit dem Schneidgut in Kontakt gebracht ist, kann das erste Gehäuseteil 1 relativ zum zweiten Gehäuseteil 2 in Uhrzeigerrichtung verdreht werden. Hierbei dreht sich zunächst nur das zweite Gehäuseteil 2 relativ zu dem Käfig 18 und den Federzungen 14 um einen begrenzten Winkel, wodurch die Federzungen 14 radial mittels der Anlaufschrägen 17 des Umschaltrings 16, der mit dem zweiten Gehäuseteil 2 drehfest verbunden ist, nach innen verschoben werden und so mit dem Außengewinde 6 in Eingriff gelangen. Anschließend gelangt das zweite Gehäuseteil 2 in Drehanschlag mit dem Käfig 18, so dass bei einer Fortsetzung der Drehbewegung nun auch der Käfig 18 samt dem daran befestigten Pressstempel 4 und der Schneidgutaufnahme 5, in die der Pressstempel 4 ragt, mitgedreht wird. Das Drehen des zweiten Gehäuseteils 2 relativ zum ersten Gehäuseteil 1 bewirkt durch den Gewindetrieb, das der Pressstempel 4 in Richtung auf das Schneidgitter 3 vorgeschoben und so das Schneidgut durch das Schneidgitter 3 gedrückt wird.

Nach dem Schneidvorgang muss der Benutzer das zweite Gehäuseteil 2 lediglich in Gegenrichtung, d.h. gegen die Uhrzeigerrichtung, drehen, wodurch die Federzungen 14 radial freigegeben werden und von dem Außengewinde 6 radial nach außen weg schwingen. Der Gewindetrieb ist in dieser Stellung freigegeben, so dass der Pressstempel 4 einfach aus der Schneidgutaufnahme 5 axial herausgezogen werden kann.

### Bezugszeichenliste:

- 1: erstes Gehäuseteil
- 2: zweites Gehäuseteil
- 3: Schneidgitter
- 4: Pressstempel
- 5: Schneidgutaufnahme
- 6: Außengewinde
- 7: erstes Griffteil
- 8: zweites Griffteil
- 9: Haltering
- 10: Auffangbehälter
- 11: Abtrennklinge
- 12: Pressvorsprünge
- 13: Schneidklingen
- 14: Federzungen
- 15: Gewindesegmente
- 16: Umschaltring
- 17: Anlaufschrägen
- 18: Käfig
- 19: Ausnehmungen
- 20: Reinigungsgitter
- 21: Federvorrichtung
- 22: Rastvorrichtung
- 23: Vorsprünge
- 24: Gegenanschläge

## Patentansprüche

1. Zerkleinerungsvorrichtung zum Schneiden von Lebensmitteln, insbesondere zum Schneiden von Knoblauch, mit einem ersten Gehäuseteil (1) und einem zweiten Gehäuseteil (2), wobei das erste Gehäuseteil (1) ein Schneidgitter (3) und das zweite Gehäuseteil (2) einen Pressstempel (4) beinhaltet, und mit einem Gewindetrieb, mittels dem durch Drehen des ersten Gehäuseteils (1) relativ zum zweiten Gehäuseteil (2) in eine Drehrichtung der Pressstempel (4) zu dem Schneidgitter (3) bewegbar ist, **dadurch gekennzeichnet, dass** die Zerkleinerungsvorrichtung eine Umschaltvorrichtung aufweist, die
a. die Gewinde des Gewindetriebs unabhängig von der axialen Relativstellung des ersten Gehäuseteils (1) relativ zum zweiten Gehäuseteil (2) automatisch in Eingriff schaltet, wenn das erste Gehäuseteil (1) relativ zum zweiten Gehäuseteil (2) in der Drehrichtung gedreht wird, und/oder die
b. die Gewinde des Gewindetriebs unabhängig von der axialen Relativstellung des ersten Gehäuseteils (1) relativ zum zweiten Gehäuseteil (2) automatisch außer Eingriff schaltet, wenn das erste Gehäuseteil (1) relativ zum zweiten Gehäuseteil (2) in der zur Drehrichtung entgegengesetzten Gegendrehrichtung gedreht wird.

2. Zerkleinerungsvorrichtung nach Anspruch 1, **dadurch gekennzeichnet, dass**
a. der Gewindetrieb ein Gewinde und ein Gegengewinde aufweist, wobei das zweite Gehäuseteil (2) das Gewinde und das erste Gehäuseteil (1) das Gegengewinde beinhaltet, und/oder dass
b. der Gewindetrieb ein Gewinde und ein Gegengewinde aufweist, wobei das zweite Gehäuseteil (2) das Gewinde und das erste Gehäuseteil (1) das Gegengewinde beinhaltet, wenn die Gehäuseteile (1, 2) räumlich voneinander getrennt sind.

3. Zerkleinerungsvorrichtung nach Anspruch 1 oder 2, **dadurch gekennzeichnet, dass**
a. die Umschaltvorrichtung zusätzlich zu dem automatischen In- Eingriff-Schalten und/oder Außer-Eingriff-Schalten ohne eine Drehung der Gehäuseteile (1, 2) relativ zueinander bedienbar ist, oder dass
b. die Umschaltvorrichtung zusätzlich zu dem automatischen In- Eingriff-Schalten und/oder Außer-Eingriff-Schalten ohne eine Drehung der Gehäuseteile (1, 2) relativ zueinander bedienbar ist, wobei die Umschaltvorrichtung durch Bewirken einer Relativdrehung eines Halterings (9) relativ zu dem zweiten Gehäuseteil (2) umschaltbar ist, und/oder dass ein Haltering (9) drehbar an dem zweiten Gehäuseteil (2) gelagert ist.

4. Zerkleinerungsvorrichtung nach einem der Ansprüche 1 bis 3, **dadurch gekennzeichnet, dass**
a. das erste Gehäuseteil (1) von dem zweiten Gehäuseteil (2) zerstörungsfrei ohne eine Relativdrehung des ersten Gehäuseteils (1) relativ zum zweiten Gehäuseteil (2) trennbar ist, wenn die Gewinde des Gewindetriebs außer Eingriff geschaltet sind, und/oder dass
b. ein Axialabstand zwischen dem Pressstempel (4) und dem Schneidgitter (3) durch ein, insbesondere axiales, Verschieben der Gehäuseteile (1, 2) relativ zueinander veränderbar ist, wenn die Gewinde des Gewindetriebs außer Eingriff geschaltet sind, und/oder dass
c. ein Axialabstand zwischen dem Pressstempel (4) und dem Schneidgitter (3) durch eine reine Linearbewegung und/oder eine reine Axialbewegung der Gehäuseteile (1, 2) relativ zueinander veränderbar ist, wenn die Gewinde des Gewindetriebs außer Eingriff geschaltet sind, und/oder dass
d. das erste Gehäuseteil (1) mit dem zweiten Gehäuseteil (2) nicht zerstörungsfrei auseinanderziehbar, insbesondere nicht axial auseinanderziehbar, verbunden ist, wenn die Gewinde des Gewindetriebs in Eingriff geschaltet sind und/oder dass
e. das erste Gehäuseteil (1) von dem zweiten Gehäuseteil (2) nicht zerstörungsfrei durch eine reine Linearbewegung oder eine reine Axialbewegung der Gehäuseteile (1, 2) relativ zueinander trennbar ist, wenn die Gewinde des Gewindetriebs in Eingriff geschaltet sind, und/oder dass
f. das erste Gehäuseteil (1) von dem zweiten Gehäuseteil (2) nicht zerstörungsfrei ohne eine Relativdrehung des ersten Gehäuseteils (1) relativ zum zweiten Gehäuseteil (2) trennbar ist, wenn die Gewinde des Gewindetriebs in Eingriff geschaltet sind, und/oder dass
g. ein Axialabstand zwischen dem Pressstempel (4) und dem Schneidgitter (3) ausschließlich durch Drehen der Gehäuseteile (1, 2) relativ zueinander bewirkbar ist, solange die Gewinde des Gewindetriebs in Eingriff geschaltet sind.

5. Zerkleinerungsvorrichtung nach einem der Ansprüche 2 bis 4, **dadurch gekennzeichnet, dass** das Gewinde des zweiten Gehäuseteils (2) mehrere Gewindesegmente (15) aufweist und/oder dass das Gegengewinde des ersten Gehäuseteils (1) mehrere Gegengewindesegmente aufweist.

6. Zerkleinerungsvorrichtung nach einem der Ansprüche 1 bis 5, **dadurch gekennzeichnet, dass**
a. in dem zweiten Gehäuseteil (2) mehrere in Umfangsrichtung verteilte Gewindesegmente (15) angeordnet sind, die radial bewegbar gehalten sind, und/oder dass
b. in dem zweiten Gehäuseteil (2) mehrere in Umfangsrichtung verteilte Gewindesegmente (15) angeordnet sind, die jeweils gegen eine Federkraft radial nach innen bewegbar gelagert sind, und/oder dass
c. in dem zweiten Gehäuseteil (2) mehrere in Umfangsrichtung verteilte Federzungen (14) mit jeweils einem Gewindesegment (15) angeordnet sind, deren Gewindesegmente (15) federelastisch radial nach innen bewegbar sind, und/oder dass
d. in dem zweiten Gehäuseteil (2) mehrere in Umfangsrichtung verteilte Federzungen (14) mit jeweils einem Gewindesegment (15) angeordnet sind, deren freie Enden federelastisch radial nach innen bewegbar sind.

7. Zerkleinerungsvorrichtung nach einem der Ansprüche 1 bis 6, **dadurch gekennzeichnet, dass**
a. die Umschaltvorrichtung mehrere Anlaufschrägen (17) aufweist, die die Gewindesegmente (15) radial nach innen bewegen, wenn das erste Gehäuseteils (1) relativ zum zweiten Gehäuseteil (2) in der Drehrichtung gedreht wird, und/oder dass
b. die Umschaltvorrichtung mehrere Anlaufschrägen (17) aufweist, die eine Bewegung der Gewindesegmente (15) radial nach außen freigeben, wenn das erste Gehäuseteil (1) in der Gegendrehrichtung gedreht wird.

8. Zerkleinerungsvorrichtung nach Anspruch 7, **dadurch gekennzeichnet, dass**
a. die Anlaufschrägen (17) an einem Umschaltring (16) angeordnet sind und/oder dass
b. die Anlaufschrägen (17) an einem Umschaltring (16) angeordnet sind, der drehfest mit dem zweiten Gehäuseteil (2) verbunden ist und/oder der drehfest in dem zweiten Gehäuseteil (2) gelagert ist, und/oder dass
c. die Anlaufschrägen (17) innerhalb des zweiten Gehäuseteils (2) angeordnet sind und/oder dass
d. die Anlaufschrägen (17) zumindest in Bezug auf Drehmomente, die in Axialrichtung wirken, drehfest mit dem zweiten Gehäuseteil (2) verbunden sind und/oder dass
e. die Anlaufschrägen (17) an einem von außen nicht zugänglichen Umschaltring (16) angeordnet sind.

9. Zerkleinerungsvorrichtung nach einem der Ansprüche 5 bis 8, **dadurch gekennzeichnet, dass**
a. die Gewindesegmente (15) und/oder die Federzungen (14), zumindest bezogen auf Drehmomente in Axialrichtung, direkt oder indirekt drehfest mit dem Pressstempel (4) verbunden sind, und/oder dass
b. die Gewindesegmente (15) in einem begrenzten Winkelbereich, insbesondere in einem Winkelbereich von 45 Grad oder von 30 Grad, drehbar innerhalb des zweiten Gehäuseteils (2) gelagert sind, und/oder dass
c. die Gewindesegmente (15) und/oder der Pressstempel drehfest an einem Käfig (18) angeordnet sind, der in einem begrenzten Winkelbereich, insbesondere in einem Winkelbereich von 45 Grad oder von 30 Grad, drehbar innerhalb des zweiten Gehäuseteils (2) gelagert ist, und/oder dass
d. die Gewindesegmente (15) und/oder der Pressstempel drehfest an einem Käfig (18) angeordnet sind, der in einem begrenzten Winkelbereich, insbesondere in einem Winkelbereich von 45 Grad oder von 30 Grad, drehbar innerhalb des zweiten Gehäuseteils (2) gelagert ist, wobei der Käfig (18) in Umfangsrichtung verteilt mehrere Ausnehmungen (19) für die Gewindesegmente (15) und/oder die Federzungen (14) aufweist, und/oder wobei der Käfig (18) in Umfangsrichtung verteilt mehrere Ausnehmungen (19) aufweist, in denen die Gewindesegmente (15) und/oder die freien Enden der Federzungen (14) radial beweglich angeordnet sind, und/oder wobei die Gewindesegmente (15) und/oder die Federzungen (14) bezogen auf Drehmomente in Axialrichtung drehfest mit dem Käfig (18) verbunden sind, und/oder wobei jede Federzunge (14) mit einem ihrer Enden fest mit dem Käfig (18) verbunden ist, während das andere Ende relativ zu dem Käfig (18) radial bewegbar ist.

10. Zerkleinerungsvorrichtung nach einem der Ansprüche 1 bis 9, **dadurch gekennzeichnet, dass**
a. der Pressstempel (4) und/oder der Käfig (18) drehfest mit einem Haltering (9) verbunden sind und/oder dass
b. der Pressstempel (4) und/oder der Käfig (18) drehfest mit einem von außen zugänglichen Haltering (9) verbunden sind, und/oder dass
c. der Käfig (18) zylinderförmig ausgebildet ist, wobei an einem Ende des Käfigs(18) ein Haltering (9) und an dem anderen Ende der Pressstempel (4) und/oder die Federzungen (14) befestigt sind.

11. Zerkleinerungsvorrichtung nach einem der Ansprüche 1 bis 10, **dadurch gekennzeichnet, dass**
a. die Gewindesegmente (15) in der Ineingriffstellung des Gewindetriebs mit einem Gegengewinde des Gewindetriebs in Eingriff stehen und in der Außereingriffstelllung des Gewindetriebs von dem Gegengewinde des Gewindetriebs beabstandet sind, oder dass
b. die Gewindesegmente (15) in der Ineingriffstellung des Gewindetriebs mit einem Gegengewinde des Gewindetriebs in Eingriff stehen und in der Außereingriffstelllung des Gewindetriebs von dem Gegengewinde des Gewindetriebs beabstandet sind, wobei das erste Gehäuseteil (1) das Gegengewinde des Gewindetriebs aufweist oder wobei das erste Gehäuseteil (1) das Gegengewinde aufweist, das auf der Außenseite des ersten Gehäuseteils angeordnet und als Außengewinde (6) ausgebildet ist.

12. Zerkleinerungsvorrichtung nach einem der Ansprüche 1 bis 11, **gekennzeichnet durch**
a. eine Schneidgutaufnahme (5), die rotierbar in dem ersten Gehäuseteil (1) gelagert ist und in die der Pressstempel (4) einführbar ist, oder durch
b. eine Schneidgutaufnahme (5), die rotierbar in dem ersten Gehäuseteil (1) gelagert ist und in die der Pressstempel (4) einführbar ist, wobei an der Schneidgutaufnahme (5) das Schneidgitter unlösbar befestigt ist und dass die Schneidgutaufnahme (5) dem Schneidgitter gegenüberliegend eine Öffnung für den Pressstempel (4) aufweist, oder durch
c. eine Schneidgutaufnahme (5), die rotierbar in dem ersten Gehäuseteil (1) gelagert ist und in die der Pressstempel (4) einführbar ist, wobei an der Schneidgutaufnahme (5) das Schneidgitter zerstörungsfrei und/oder werkzeuglos lösbar befestigt ist und dass die Schneidgutaufnahme (5) dem Schneidgitter gegenüberliegend eine Öffnung für den Pressstempel (4) aufweist.

13. Zerkleinerungsvorrichtung nach einem der Ansprüche 1 bis 12, **dadurch gekennzeichnet, dass**
a. der Pressstempel (4) in einem Querschnitt senkrecht zur Axialrichtung eine von der Kreisform abweichende Außenkontur aufweist und/oder dass
b. der Pressstempel in einem Querschnitt senkrecht zur Axialrichtung eine von der Kreisform abweichende Außenkontur aufweist und die Schneidgutaufnahme (5) in einem Querschnitt senkrecht zur Axialrichtung eine komplementäre Innenkontur aufweist.

14. Zerkleinerungsvorrichtung nach Anspruch 12 oder 13, **dadurch gekennzeichnet, dass**
a. der Pressstempel (4) an seinem freien Ende mehrere Pressvorsprünge (12) aufweist, die in die Zwischenräume zwischen den Schneidklingen (13) des Schneidgitters einführbar sind, und dass ein Reinigungsgitter (20) gegen die Kraft einer Federvorrichtung (21) axial verschiebbar zwischen den Pressvorsprüngen (12) gelagert ist, das wenigstens einen radial über die Außenkontur des Pressstempels (4) hervorstehenden Anschlag aufweist, der an einem Gegenanschlag der Schneidgutaufnahme anschlägt und das Reinigungsgitter (20) zu den Schneidklingen (13) des Schneidgitters auf Abstand hält, wenn die Pressvorsprünge (12) in die Zwischenräume zwischen den Schneidklingen (13) des Schneidgitters eintauchen, und/oder dass
b. der Drehwiderstand zum Umschalten von der Ineingriffstellung des Gewindetriebs in die Außereingriffstelllung und/oder der Drehwiderstand zum Umschalten von der Außereingriffstelllung des Gewindetriebs in die Ineingriffstellung kleiner ist, als der Drehwiderstand zum Drehen der Schneidgutaufnahme (5) relativ zum ersten Gehäuseteil (1).

15. Zerkleinerungsvorrichtung nach einem der Ansprüche 1 bis 14, **dadurch gekennzeichnet, dass**
a. das erste Gehäuseteil (1) benachbart zum Schneidgitter eine radial ausgerichtete Abtrennklinge (11) aufweist, und/oder dass
b. die Zerkleinerungsvorrichtung einen Auffangbehälter (10) aufweist, der an dem ersten Gehäuseteil (1) festlegbar ist und/oder der zumindest teilweise in das erste Gehäuseteil (1) einführbar ist.

## Claims

1. Chopping device for cutting foodstuffs, in particular for cutting garlic, comprising a first housing part (1) and a second housing part (2), the first housing part (1) comprising a cutting grid (3) and the second housing part (2) comprising a pressing ram (4), and comprising a threaded mechanism, by means of which, by rotation of the first housing part (1) in one direction of rotation relative to the second housing part (2), the pressing ram (4) is movable with respect to the cutting grid (3), **characterized in that** the chopping device has a changeover device which
a. automatically switches the threads of the threaded mechanism into engagement irrespective of the axial relative position of the first housing part (1) relative to the second housing part (2) when the first housing part (1) is rotated in the direction of rotation relative to the second housing part (2), and/or which
b. automatically switches the threads of the threaded mechanism out of engagement irrespective of the axial relative position of the first housing part (1) relative to the second housing part (2) when the first housing part (1) is rotated in the counter direction of rotation, which is opposed to the direction of rotation, relative to the second housing part (2).

2. Chopping device according to Claim 1, **characterized in that**
a. the threaded mechanism has a thread and a mating thread, wherein the second housing part (2) comprises the thread and the first housing part (1) comprises the mating thread, and/or **in that**
b. the threaded mechanism has a thread and a mating thread, wherein the second housing part (2) comprises the thread and the first housing part (1) comprises the mating thread when the housing parts (1, 2) are spatially separated from each other.

3. Chopping device according to Claim 1 or 2, **characterized in that**
a. the changeover device can be operated in addition to the automatic switching into engagement and/or switching out of engagement without a rotation of the housing parts (1, 2) relative to each other, or **in that**
b. the changeover device can be operated in addition to the automatic switching into engagement and/or switching out of engagement without a rotation of the housing parts (1, 2) relative to each other wherein the changeover device can be changed over by bringing about a relative rotation of a holding ring (9) relative to the second housing part (2), and/or **in that** a holding ring (9) is mounted rotatably on the second housing part (2).

4. Chopping device according to one of Claims 1 to 3, **characterized in that**
a. the first housing part (1) is separable from the second housing part (2) so as to be releaseable without destruction without a relative rotation of the first housing part (1) relative to the second housing part (2) when the threads of the threaded mechanism are switched out of engagement, and/or **in that**
b. an axial distance between the pressing ram (4) and the cutting grid (3) can be changed by an in particular axial displacement of the housing parts (1, 2) relative to each other when the threads of the threaded mechanism are switched out of engagement, and/or **in that**
c. an axial distance between the pressing ram (4) and the cutting grid (3) can be changed by a pure linear movement and/or a pure axial movement of the housing parts (1, 2) relative to each other when the threads of the threaded mechanism are switched out of engagement and/or **in that**
d. the first housing part (1) is connected to the second housing part (2) such that they cannot be pulled apart without destruction, in particular cannot be pulled apart axially, when the threads of the threaded mechanism are switched into engagement, and/or **in that**
e. the first housing part (1) cannot be separated from the second housing part (2) without destruction by a pure linear movement or a pure axial movement of the housing parts (1, 2) relative to each other when the threads of the threaded mechanism are switched into engagement, and/or **in that**
f. the first housing part (1) cannot be separated from the second housing part (2) without destruction without a relative rotation of the first housing part (1) relative to the second housing part (2) when the threads of the threaded mechanism are switched into engagement, and/or **in that**
g. an axial distance between the pressing ram (4) and the cutting grid (3) can be brought about exclusively by rotation of the housing parts (1, 2) relative to each other as long as the threads of threaded mechanism are switched into engagement.

5. Chopping device according to one of Claims 2 to 4, **characterized in that** the thread of the second housing part (2) has a plurality of threaded segments (15), and/or **in that** the mating thread of the first housing part (1) has a plurality of mating threaded segments.

6. Chopping device according to one of Claims 1 to 5, **characterized in that**
a. a plurality of threaded segments (15) which are distributed in the circumferential direction and are held in a radially movable manner are arranged in the second housing part (2), and/or **in that**
b. a plurality of threaded segments (15) which are distributed in the circumferential direction and are each mounted in a manner movable radially inward counter to a spring force are arranged in the second housing part (2), and/or **in that**
c. a plurality of spring tongues (14) which are distributed in the circumferential direction and each have a threaded segment (15) are arranged in the second housing part (2), the threaded segments (15) of which spring tongues are movable radially inward in a spring-elastic manner, and/or **in that**
d. a plurality of spring tongues (14) which are distributed in the circumferential direction and each have a threaded segment (15) are arranged in the second housing part (2), the free ends of which spring tongues are movable radially inward in a spring-elastic manner.

7. Chopping device according to one of Claims 1 to 6, **characterized in that**
a. the changeover device has a plurality of run-on slopes (17) which move the threaded segments (15) radially inward when the first housing part (1) is rotated in the direction of rotation relative to the second housing part (2), and/or **in that**
b. the changeover device has a plurality of run-on slopes (17) which enable a movement of the threaded segments (15) radially outward when the first housing part (1) is rotated in the counter direction of rotation.

8. Chopping device according to Claim 7, **characterized in that**
a. the run-on slopes (17) are arranged on a changeover ring (16), and/or **in that**
b. the run-on slopes (17) are arranged on a changeover ring (16) which is connected to the second housing part (2) for rotation therewith and/or which is mounted in the second housing part (2) for rotation therewith, and/or **in that**
c. the run-on slopes (17) are arranged within the second housing part (2), and/or **in that**
d. the run-on slopes (17) are connected to the second housing part (2) for rotation therewith, at least with respect to torques which act in the axial direction, and/or **in that**
e. the run-on slopes (17) are arranged on a changeover ring (16) which is not accessible from the outside.

9. Chopping device according to one of Claims 5 to 8, **characterized in that**
a. the threaded segments (15) and/or the spring tongues (14) are directly or indirectly connected to the pressing ram (4) for rotation therewith, at least with respect to torques in the axial direction, and/or **in that**
b. the threaded segments (15) are mounted within the second housing part (2) so as to be rotatable within a limited angular range, in particular within an angular range of 45 degrees or of 30 degrees, and/or **in that**
c. the threaded segments (15) and/or the pressing ram are arranged on a cage (18) for rotation therewith, said cage being mounted within the second housing part (2) so as to be rotatable within a limited angular range, in particular within an angular range of 45 degrees or of 30 degrees, and/or **in that**
d. the threaded segments (15) and/or the pressing ram are arranged on a cage (18) for rotation therewith, said cage being mounted within the second housing part (2) so as to be rotatable within a limited angular range, in particular within an angular range of 45 degrees or of 30 degrees, wherein the cage (18) has a plurality of recesses (19), which are distributed in the circumferential direction, for the threaded segments (15) and/or the spring tongues (14), and/or wherein the cage (18) has a plurality of recesses (19), which are distributed in the circumferential direction, in which the threaded segments (15) and/or the free ends of the spring tongues (14) are arranged in a radially movable manner, and/or wherein the threaded segments (15) and/or the spring tongues (14) are connected to the cage (18) for rotation therewith with respect to torques in the axial direction, and/or wherein each spring tongue (14) is fixedly connected at one of the ends thereof to the cage (18) while the other end is movable radially relative to the cage (18).

10. Chopping device according to one of Claims 1 to 9, **characterized in that**
a. the pressing ram (4) and/or the cage (18) are connected to a holding ring (9) for rotation therewith, and/or **in that**
b. the pressing ram (4) and/or the cage (18) are connected to a holding ring (9), which is accessible from the outside, for rotation therewith, and/or **in that**
c. the cage (18) is of cylindrical design, with a holding ring (9) being fastened to one end of the cage (18) and the pressing ram (4) and/or the spring tongues (14) being fastened to the other end.

11. Chopping device according to one of Claims 1 to 10, **characterized in that**,
a. in the engaged position of the threaded mechanism, the threaded segments (15) are in engagement with a mating thread of the threaded mechanism and, in the disengaged position of the threaded mechanism, are spaced apart from the mating thread of the threaded mechanism, or **in that**,
b. in the engaged position of the threaded mechanism, the threaded segments (15) are in engagement with a mating thread of the threaded mechanism and, in the disengaged position of the threaded mechanism, are spaced apart from the mating thread of the threaded mechanism, wherein the first housing part (1) has the mating thread of the threaded mechanism, or wherein the first housing part (1) has the mating thread which is arranged on the outer side of the first housing part and is designed as an external thread (6).

12. Chopping device according to one of Claims 1 to 11, **characterized by**
a. a cutting material receptacle (5) which is mounted rotatably in the first housing part (1) and into which the pressing ram (4) can be introduced, or by
b. a cutting material receptacle (5) which is mounted rotatably in the first housing part (1) and into which the pressing ram (4) can be introduced, wherein the cutting grid is fastened non-releasably to the cutting material receptacle (5), and in that the cutting material receptacle (5) has an opening for the pressing ram (4) opposite the cutting grid, or by
c. a cutting material receptacle (5) which is mounted rotatably in the first housing part (1) and into which the pressing ram (4) can be introduced, wherein the cutting grid is fastened to the cutting material receptacle (5) so as to be releasable without destruction and/or without a tool, and in that the cutting material receptacle (5) has an opening for the pressing ram (4) opposite the cutting grid.

13. Chopping device according to one of Claims 1 to 12, **characterized in that**
a. the pressing ram (4) has an outer contour deviating from the circular shape, in a cross section perpendicular to the axial direction, and/or **in that**
b. the pressing ram has an outer contour deviating from the circular shape, in a cross section perpendicular to the axial direction, and the cutting material receptacle (5) has a complementary inner contour, in a cross section perpendicular to the axial direction.

14. Chopping device according to Claim 12 or 13, **characterized in that**
a. the pressing ram (4), at the free end thereof, has a plurality of pressing projections (12) which can be introduced into the intermediate spaces between the cutting blades (13) of the cutting grid, and **in that** a cleaning grid (20) is mounted between the pressing projections (12) so as to be axially displaceable counter to the force of a spring device (21), said cleaning grid having at least one stop which projects radially beyond the outer contour of the pressing ram (4), strikes against a counter stop of the cutting material receptacle and keeps the cleaning grid (20) at a distance from the cutting blades (13) of the cutting grid when the pressing projections (12) enter the intermediate spaces between the cutting blades (13) of the cutting grid, and/or **in that**
b. the rotational resistance for switching over from the engaged position of the threaded mechanism into the disengaged position and/or the rotational resistance for switching over from the disengaged position of the threaded mechanism into the engaged position is smaller than the rotational resistance for rotating the cutting material receptacle (5) relative to the first housing part (1).

15. Chopping device according to one of Claims 1 to 14, **characterized in that**
a. the first housing part (1) has a radially oriented severing blade (11) adjacent to the cutting grid, and/or **in that**
b. the chopping device has a collecting container (10) which can be fixed on the first housing part (1) and/or which can be at least partially introduced into the first housing part (1).

## Revendications

1. Dispositif de broyage pour couper des aliments, en particulier pour couper de l'ail, avec une première partie de boîtier (1) et une deuxième partie de boîtier (2), dans lequel la première partie de boîtier (1) comprend une grille de coupe (3) et la deuxième partie de boîtier (2) comprend un tampon de pressage (4), et avec un entraînement à filet, au moyen duquel par la rotation de la première partie de boîtier (1) par rapport à la deuxième partie de boîtier (2) dans un sens de rotation le tampon de pressage (4) est déplaçable par rapport à la grille de coupe (3), **caractérisé en ce que** le dispositif de broyage présente un dispositif de commutation, qui
a. commute automatiquement en engagement les filets de l'entraînement à filet indépendamment de la position axiale relative de la première partie de boîtier (1) par rapport à la deuxième partie de boîtier (2), lorsque la première partie de boîtier (1) tourne par rapport à la deuxième partie de boîtier (2) dans le sens de rotation, et/ou qui
b. rompt automatiquement l'engagement des filets de l'entraînement à filet indépendamment de la position axiale relative de la première partie de boîtier (1) par rapport à la deuxième partie de boîtier (2), lorsque la première partie de boîtier (1) tourne par rapport à la deuxième partie de boîtier (2) dans l'autre sens de rotation opposé au sens de rotation.

2. Dispositif de broyage selon la revendication 1, **caractérisé en ce que**
a. l'entraînement à filet présente un filet et un filet opposé, dans lequel la deuxième partie de boîtier (2) présente le filet et la première partie de boîtier (1) présente le filet opposé, et/ou
b. l'entraînement à filet présente un filet et un filet opposé, dans lequel la deuxième partie de boîtier (2) présente le filet et la première partie de boîtier (1) présente le filet opposé, lorsque les parties de boîtier (1, 2) sont spatialement séparées l'une de l'autre.

3. Dispositif de broyage selon la revendication 1 ou 2, **caractérisé en ce que**
a. le dispositif de commutation peut être commandé sans rotation des parties de boîtier (1, 2) l'une par rapport à l'autre, en plus de l'enclenchement et/ou du déclenchement automatique, ou
b. le dispositif de commutation peut être commandé sans rotation des parties de boîtier (1, 2) l'une par rapport à l'autre, en plus de l'enclenchement et/ou du déclenchement automatique, dans lequel le dispositif de commutation peut être commuté par l'action d'une rotation relative d'une bague de maintien (9) par rapport à la deuxième partie de boîtier (2), et/ou **en ce qu'**une bague de maintien (9) est montée de façon rotative sur la deuxième partie de boîtier (2).

4. Dispositif de broyage selon l'une quelconque des revendications 1 à 3, **caractérisé en ce que**:
a. la première partie de boîtier (1) est séparable de la deuxième partie de boîtier (2) sans destruction sans une rotation relative de la première partie de boîtier (1) par rapport à la deuxième partie de boîtier (2), lorsque les filets de l'entraînement à filet ne sont pas en engagement, et/ou
b. une distance axiale entre le tampon de pressage (4) et la grille de coupe (3) peut être modifiée par un déplacement, en particulier axial, des parties de boîtier (1, 2) l'une par rapport à l'autre, lorsque les filets de l'entraînement à filet ne sont pas en engagement, et/ou
c. une distance axiale entre le tampon de pressage (4) et la grille de coupe (3) peut être modifiée par un mouvement purement linéaire et/ou un mouvement purement axial des parties de boîtier (1, 2) l'une par rapport à l'autre, lorsque les filets de l'entraînement à filet ne sont pas en engagement, et/ou
d. la première partie de boîtier (1) est assemblée à la deuxième partie de boîtier (2) de façon non séparable sans destruction, en particulier de façon non séparable axialement, lorsque les filets de l'entraînement à filet sont en engagement, et/ou
e. la première partie de boîtier (1) ne peut pas être séparée de la deuxième partie de boîtier (2) sans destruction par un mouvement purement linéaire ou un mouvement purement axial des parties de boîtier (1, 2) l'une par rapport à l'autre, lorsque les filets de l'entraînement à filet sont en engagement, et/ou
f. la première partie de boîtier (1) ne peut pas être séparée de la deuxième partie de boîtier (2) sans destruction sans une rotation relative de la première partie de boîtier (1) par rapport à la deuxième partie de boîtier (2), lorsque les filets de l'entraînement à filet sont en engagement, et/ou
g. une distance axiale entre le tampon de pressage (4) et la grille de coupe (3) est réalisable exclusivement par une rotation relative des parties de boîtier (1, 2) l'une par rapport à l'autre, aussi longtemps que les filets de l'entraînement à filet sont en engagement.

5. Dispositif de broyage selon l'une quelconque des revendications 2 à 4, **caractérisé en ce que** le filet de la deuxième partie de boîtier (2) présente plusieurs segments de filet (15) et/ou **en ce que** le filet opposé de la première partie de boîtier (1) présente plusieurs segments de filet opposé.

6. Dispositif de broyage selon l'une quelconque des revendications 1 à 5, **caractérisé en ce que**
a. plusieurs segments de filet (15) sont disposés de façon répartie en direction périphérique dans la deuxième partie de boîtier (2), et sont maintenus de façon mobile radialement, et/ou
b. plusieurs segments de filet (15) sont disposés de façon répartie en direction périphérique dans la deuxième partie de boîtier (2), et sont montés de façon radialement mobile vers l'intérieur respectivement contre une force de ressort, et/ou
c. plusieurs lamelles de ressort (14) sont disposées de façon répartie en direction périphérique dans la deuxième partie de boîtier (2), chacune avec un segment de filet (15), dont les segments de filet (15) sont élastiquement mobiles radialement vers l'intérieur, et/ou
d. plusieurs lamelles de ressort (14) sont disposées de façon répartie en direction périphérique dans la deuxième partie de boîtier (2), chacune avec un segment de filet (15), dont les extrémités libres sont élastiquement mobiles radialement vers l'intérieur.

7. Dispositif de broyage selon l'une quelconque des revendications 1 à 6, **caractérisé en ce que**
a. le dispositif de commutation présente plusieurs rampes d'attaque (17), qui déplacent les segments de filet (15) radialement vers l'intérieur, lorsque la première partie de boîtier (1) est tournée par rapport à la deuxième partie de boîtier (2) dans le sens de rotation, et/ou
b. le dispositif de commutation présente plusieurs rampes d'attaque (17), qui libèrent un mouvement des segments de filet (15) radialement vers l'extérieur, lorsque la première partie de boîtier (1) est tournée dans le sens de rotation opposé.

8. Dispositif de broyage selon la revendication 7, **caractérisé en ce que**
a. les rampes d'attaque (17) sont disposées sur une bague de commutation (16), et/ou
b. les rampes d'attaque (17) sont disposées sur une bague de commutation (16), qui est assemblée sans rotation à la deuxième partie de boîtier (2), et/ou qui est montée sans rotation dans la deuxième partie de boîtier (2), et/ou
c. les rampes d'attaque (17) sont disposées à l'intérieur de la deuxième partie de boîtier (2), et/ou
d. les rampes d'attaque (17) sont assemblées sans rotation à la deuxième partie de boîtier (2), au moins par rapport à des couples qui agissent en direction axiale, et/ou
e. les rampes d'attaque (17) sont disposées sur une bague de commutation (16) non accessible de l'extérieur.

9. Dispositif de broyage selon l'une quelconque des revendications 5 à 8, **caractérisé en ce que**
a. les segments de filet (15) et/ou les lamelles de ressort (14) sont reliés au tampon de pressage (4) directement ou indirectement, sans rotation au moins par rapport à des couples agissant en direction axiale, et/ou
b. les segments de filet (15) sont montés de façon rotative à l'intérieur de la deuxième partie de boîtier (2), dans une plage angulaire limitée, en particulier dans une plage angulaire de 45 degrés ou de 30 degrés, et/ou
c. les segments de filet (15) et/ou le tampon de pressage sont disposés sans rotation sur une cage (18), qui est montée de façon rotative à l'intérieur de la deuxième partie de boîtier (2) dans une plage angulaire limitée, en particulier dans une plage angulaire de 45 degrés ou de 30 degrés, et/ou
d. les segments de filet (15) et/ou le tampon de pressage sont disposés sans rotation sur une cage (18), qui est montée de façon rotative à l'intérieur de la deuxième partie de boîtier (2) dans une plage angulaire limitée, en particulier dans une plage de 45 degrés ou de 30 degrés, dans lequel la cage (18) présente plusieurs évidements (19) répartis en direction périphérique pour les segments de filet (15) et/ou les lamelles de ressort (14), et/ou dans lequel la cage (18) présente plusieurs évidements (19) répartis en direction périphérique, dans lesquels les segments de filet (15) et/ou les extrémités libres des lamelles de ressort (14) sont disposés de façon mobile radialement, et/ou dans lequel les segments de filet (15) et/ou les lamelles de ressort (14) sont assemblés à la cage sans rotation par rapport à des couples agissant en direction axiale, et/ou dans lequel chaque lamelle de ressort (14 est assemblée solidement par une de ses extrémités à la cage (18), tandis que l'autre extrémité est mobile radialement par rapport à la cage (18).

10. Dispositif de broyage selon l'une quelconque des revendications 1 à 9, **caractérisé en ce que**
a. le tampon de pressage (4) et/ou la cage (18) sont assemblés sans rotation à une bague de maintien (9), et/ou
b. le tampon de pressage (4) et/ou la cage (18) sont assemblés sans rotation à une bague de maintien (9) accessible de l'extérieur, et/ou
c. la cage (18) est de forme cylindrique, dans lequel une bague de maintien (9) est fixée à une extrémité de la cage (8) et le tampon de pressage (4) et/ou les lamelles de ressort (14) est/sont fixé/fixées à l'autre extrémité.

11. Dispositif de broyage selon l'une quelconque des revendications 1 à 10, **caractérisé en ce que**
a. dans la position d'engagement de l'entraînement à filet, les segments de filet (15) engrènent avec un filet opposé de l'entraînement à filet et dans la position de non engagement de l'entraînement à filet ils sont espacés du filet opposé de l'entraînement à filet, ou
b. dans la position d'engagement de l'entraînement à filet, les segments de filet (15) engrènent avec un filet opposé de l'entraînement à filet et dans la position de non engagement de l'entraînement à filet ils sont espacés du filet opposé de l'entraînement à filet, dans lequel la première partie de boîtier (1) présente le filet opposé de l'entraînement à filet ou dans lequel la première partie de boîtier (1) présente le filet opposé, qui est disposé sur le côté extérieur de la première partie de boîtier (1) et qui est réalisé sous forme de filet extérieur (6) .

12. Dispositif de broyage selon l'une quelconque des revendications 1 à 11, **caractérisé par**
a. un réceptacle de produit coupé (5), qui est monté de façon rotative dans la première partie de boîtier (1) et dans lequel le tampon de pressage (4) peut être introduit, ou par
b. un réceptacle de produit coupé (5), qui est monté de façon rotative dans la première partie de boîtier (1) et dans lequel le tampon de pressage (4) peut être introduit, dans lequel la grille de coupe est fixée de façon inséparable au réceptacle de produit coupé (5) et le réceptacle de produit coupé (5) présente une ouverture pour le tampon de pressage (4) en face de la grille de coupe, ou par
c. un réceptacle de produit coupé (5), qui est monté de façon rotative dans la première partie de boîtier (1) et dans lequel le tampon de pressage (4) peut être introduit, dans lequel la grille de coupe est fixée au réceptacle de produit coupé (5) de façon séparable sans destruction et/ou sans outil et le réceptacle de produit coupé (5) présente une ouverture pour le tampon de pressage (4) en face de la grille de coupe.

13. Dispositif de broyage selon l'une quelconque des revendications 1 à 12, **caractérisé en ce que**
a. le tampon de pressage (4) présente dans une section transversale perpendiculaire à la direction axiale un contour extérieur qui est différent de la forme circulaire, et/ou
b. le tampon de pressage présente dans une section transversale perpendiculaire à la direction axiale un contour extérieur qui est différent de la forme circulaire et le réceptacle de produit coupé (5) présente dans une section transversale perpendiculaire à la direction axiale un contour intérieur complémentaire.

14. Dispositif de broyage selon l'une des revendications 12 ou 13, **caractérisé en ce que**
a. le tampon de pressage (4) présente à son extrémité libre plusieurs protubérances de pressage (12), qui peuvent être introduites dans les espaces intermédiaires entre les lames de coupe (13) de la grille de coupe, et **en ce qu'**une grille de nettoyage (20) est montée de façon déplaçable axialement contre la force d'un dispositif à ressort (21) entre les protubérances de pressage (12), et présente au moins une butée saillante radialement au-delà du contour extérieur du tampon de pressage (4), laquelle bute contre une contrebutée du réceptacle de produit coupé et maintient la grille de nettoyage (20) à distance des lames de coupe (13) de la grille de coupe, lorsque les protubérances de pressage (12) plongent dans les espaces intermédiaires entre les lames de coupe (13) de la grille de coupe, et/ou
b. la résistance de rotation pour commuter de la position d'engagement de l'entraînement à filet à la position de non engagement et/ou la résistance de rotation pour commuter de la position de non engagement de l'entraînement à filet à la position d'engagement est inférieure à la résistance de rotation pour faire tourner le réceptacle de produit coupé (5) par rapport à la première partie de boîtier (1).

15. Dispositif de broyage selon l'une quelconque des revendications 1 à 14, **caractérisé en ce que**
a. la première partie de boîtier (1) présente à proximité de la grille de coupe une lame de coupe (11) orientée radialement, et/ou
b. le dispositif de broyage présente un réceptacle de réception (10), qui peut être fixé à la première partie de boîtier (1) et/ou qui peut être introduit au moins en partie dans la première partie de boîtier (1).
